# EUROPÄISCHE PATENTSCHRIFT

(11) **EP 4 142 560 B1**
(45) Veröffentlichungstag und Bekanntmachung des Hinweises auf die Patenterteilung: **10.09.2025**
(21) Anmeldenummer: 21716986.1
(22) Anmeldetag: 30.03.2021
(51) Int. Cl.: A47L 13/51, B62B 3/00

(54) **REINIGUNGSWAGEN**
CLEANING TROLLEY
CHARIOT DE NETTOYAGE

(30) Priorität: 29.04.2020 DE 102020111731
(43) Veröffentlichungstag der Anmeldung: 08.03.2023
(73) Patentinhaber: Alfred Kärcher SE & Co. KG, 71364 Winnenden (DE)
(72) Erfinder: ARMBRUSTER, Patrick, 71364 Winnenden (DE); BURCHARD, Jochen, 71364 Winnenden (DE); DAMMKÖHLER, Denis, 71364 Winnenden (DE); DOBLER, Kamila, 71364 Winnenden (DE); GUEGERCIN, Beyza, 71364 Winnenden (DE); JAHN, Marten, 71364 Winnenden (DE); KUHN, Jens, 71364 Winnenden (DE); MANISCALCO, Calogero, 71364 Winnenden (DE)
(74) Vertreter: DTS Patent- und Rechtsanwälte PartmbB
(86) Internationale Anmeldenummer: PCT/EP2021/058284
(87) Internationale Veröffentlichungsnummer: WO 2021/219313

(56) Entgegenhaltungen:
- EP-A1- 1 437 283
- EP-A1- 3 208 174
- EP-A2- 1 190 664
- DE-A1- 3 247 135
- DE-U1- 8 430 997
- IT-A1- MI20 100 965
- US-A1- 2011 133 417
- US-A1- 2014 049 014
- US-A1- 2016 332 651
- US-A1- 2018 103 820

## Beschreibung

Die vorliegende Erfindung betrifft einen Reinigungswagen umfassend einen Rahmen mit einem Rahmenunterteil, einem Rahmenoberteil und Stützteilen, die das Rahmenunterteil mit dem Rahmenoberteil verbinden und voneinander beabstandet sind, Rollen am Rahmenunterteil zum Verfahren auf einer Bodenfläche und Bevorratungseinrichtungen zum Aufnehmen und/oder Abstellen von Reinigungszubehör.

Trotz moderner Reinigungsmaschinen insbesondere im Bereich der Innenreinigung, die zum Teil automatisiert sein können, sind Reinigungswagen im Bereich täglicher Reinigung von großer Bedeutung. Hervorzuheben sind insbesondere manuell durchzuführende Reinigungsaufgaben in größeren Gebäuden, zu Beispiel Bürogebäuden, Hotels, Pflegeeinrichtungen, Krankenhäusern, Flughäfen, Veranstaltungsgebäuden oder dergleichen. Die Reinigungswagen dienen dazu, Reinigungsutensilien mitzuführen. Beispiele hierfür sind insbesondere manuell geführte Reinigungsmaschinen und Reinigungswerkzeuge, Behältnisse zur Bevorratung von Reinigungszubehör, Reinigungsflüssigkeiten oder Reinigungschemikalien, Behältnisse zur Aufnahme von Schmutzflüssigkeit oder Abfall, Reinigungstücher oder andere Gegenstände zur Oberflächenreinigung.

Die Reinigungswagen umfassen Rollen, so dass sie von einem Benutzer üblicherweise handgeführt über eine Bodenfläche verfahren werden können. Die Rollen können im vorliegenden Fall feststehend, d. h. ungelenkt sein. Alternativ kann vorgesehen sein, dass die Rollen Lenkrollen sind. Auch eine Mischung von ungelenkten Rollen und Lenkrollen kann vorgesehen sein.

Die Reinigungswagen umfassen einen Rahmen mit einem Rahmenunterteil und einem davon beabstandeten Rahmenoberteil, die über Stützteile miteinander verbunden sind, wobei die Stützteile zum Beispiel Profilteile sind. Der Rahmen kann beispielsweise einen Aufnahmeraum für die Reinigungsutensilien definieren, der zum Beispiel mittels Seitenwänden, einer Deckenwand und/oder Türen geschlossen sein kann. Dies ist jedoch nicht zwingend erforderlich. Als Rahmen kann dementsprechend vorliegend insbesondere auch ein Korpus oder ein Gestell angesehen werden.

Fahrwagen mit Bevorratungseinrichtungen, die über Halteelemente an unterschiedlichen Positionen am Rahmen angeordnet werden können, sind zum Beispiel in der US 2014/0049014 A1, in der US 2011/0133417 A1 und in der EP 1 437 283 A1 beschrieben.

Aufgabe der vorliegenden Erfindung ist es, einen Reinigungswagen bereitzustellen, der eine höhere Vielseitigkeit aufweist.

Diese Aufgabe wird durch einen erfindungsgemäßen Reinigungswagen mit den Merkmalen von Anspruch 1 gelöst.

Bei dem erfindungsgemäßen Reinigungswagen können Bevorratungseinrichtungen über die Halteelemente und die Aufnahmeelemente an den Stützteilen festgelegt werden. Hierbei besteht insbesondere die Möglichkeit, dass die Bevorratungseinrichtungen in unterschiedlichen Relativpositionen zu den Stützteilen festgelegt werden. Dies kann im vorliegenden Fall dadurch erfolgen, dass Halteelemente zur Erzielung unterschiedlicher Relativpositionen mit unterschiedlichen Aufnahmeelementen zusammenwirken können. Dies gibt die Möglichkeit, den Reinigungswagen beispielsweise je nach Reinigungsaufgabe und/oder Vorlieben eines Benutzers in unterschiedlicher Konfiguration bereitzustellen, wobei die Bevorratungseinrichtungen in eine bevorzugte Position am Rahmen gebracht werden. Denkbar ist es, dass die Positionierung der Bevorratungseinrichtungen werkseitig erfolgt. Vorteilhaft ist es allerdings insbesondere, wenn der Benutzer selbst die Bevorratungseinrichtungen in der gewünschten Position anordnen kann. Zu diesem Zweck sind die Halteelemente bevorzugt von den Aufnahmeelementen lösbar.

Die vorliegende Erfindung bietet insbesondere die Möglichkeit eines benutzerdefinierten "modulartigen" Aufbaus und einer derartigen Zusammenstellung durch den Benutzer. Beispielsweise kann eine Menge gleicher und/oder verschiedenartiger Bevorratungseinrichtungen vorgesehen sein, die nach Wunsch des Benutzers wahlweise am Rahmen festlegbar sind. Denkbar ist es insbesondere, dass mehr Bevorratungseinrichtungen vorhanden sind, als üblicherweise mit dem Reinigungswagen mitgeführt werden oder daran angebracht werden können. Auf die Reinigungsaufgabe abgestimmt kann dadurch zum Beispiel eine ideale Zusammenstellung von Bevorratungseinrichtungen vorgenommen werden.

Die Halteelemente sind vorzugsweise frei wählbar an den Aufnahmeelementen festlegbar.

Günstig ist es, wenn mehrere Aufnahmeelemente in einer Höhenrichtung des Reinigungswagens voneinander beabstandet vorgesehen sind und die Halteelemente in der Höhenrichtung wahlweise an unterschiedlichen Positionen festlegbar sind. Auf diese Weise kann die Höhe der Bevorratungseinrichtungen am Rahmen eingestellt werden. Beispielsweise werden die Halteelemente zwischen dem Rahmenunterteil und dem Rahmenoberteil angebracht.

Die Aufnahmeelemente sind in der Höhenrichtung bei einer bevorzugten Ausführungsform der Erfindung äquidistant zueinander angeordnet. Beispielsweise kann bezogen auf die Höhenrichtung ein Raster von Aufnahmeelementen vorgesehen sein.

Positions- und Orientierungsangaben wie beispielsweise "unten", "oben", "Höhenrichtung" oder dergleichen sind vorliegend auf einen bestimmungsgemäßen Gebrauch des Reinigungswagens bezogen aufzufassen. Im bestimmungsgemäßen Gebrauch steht der Reinigungswagen über die Rollen auf der Bodenfläche auf. Nicht-einschränkend kann angenommen werden, dass die Bodenfläche horizontal ausgerichtet ist.

Von Vorteil ist es, wenn an den Stützteilen Aufnahmeelemente vorgesehen sind, die an zwei quer und insbesondere senkrecht zueinander ausgerichteten Seiten der Stützteile angeordnet sind, und wenn die Halteelemente wahlweise an einem Aufnahmeelement an einer ersten Seite oder an einem Aufnahmeelement an einer zweiten Seite der beiden Seiten festlegbar sind, im Hinblick auf unterschiedliche Orientierungen der Halteelemente relativ zum Stützteil. Je nachdem, am Aufnahmeelement welcher Seite (erste oder zweite Seite) das Halteelement festgelegt wird, kann dieses relativ zum Stützteil unterschiedlich orientiert ausgerichtet werden.

Günstigerweise sind zwei Orientierungen vorgesehen, die quer und insbesondere senkrecht zueinander ausgerichtet sind. Eine jeweilige Orientierung kann beispielsweise eine Auszugsrichtung für eine ausziehbare Bevorratungseinrichtung definieren.

Die erste und zweite Seite können beispielsweise aneinander grenzen und in der Höhenrichtung erstreckt sein, wobei vorzugsweise mehrere in der Höhenrichtung voneinander beabstandete Aufnahmeelemente vorgesehen sind.

Die an den zwei quer zueinander angeordneten Seiten angeordneten Aufnahmeelemente sind bevorzugt in einer Höhenrichtung des Reinigungswagens an derselben Position angeordnet.

Die Bevorratungseinrichtungen sind oder umfassen vorzugsweise Behälter, die beispielsweise einen Aufnahmeraum für Reinigungsutensilien aufweisen oder bilden. Die Behälter sind zum Beispiel eimerförmig oder wannenförmig. Ausziehbare Behälter können schubladenartig sein oder eine Schublade bilden.

Vorgesehen sein kann beispielsweise, dass zumindest zwei Behälter unterschiedliche Größen aufweisen, wobei die Behälter insbesondere entlang einer Höhenrichtung des Reinigungswagens unterschiedliche Höhen aufweisen und vorzugsweise quer zur Höhenrichtung einen identischen Querschnitt aufweisen. Dies erlaubt es, je nach Wunsch oder Reinigungsaufgabe Behälter unterschiedlicher Größe mitzuführen.

Vorgesehen sein kann, dass zumindest zwei Behälter identische Größen aufweisen und insbesondere identisch ausgestaltet sind.

Die Behälter können bei einer bevorzugten Ausführungsform einen im Wesentlichen rechteckigen Querschnitt quer zu einer Höhenrichtung des Reinigungswagens aufweisen.

Günstig kann es sein, wenn der Reinigungswagen eine Kennzeichnungseinrichtung zum Kennzeichnen der Bevorratungseinrichtungen und speziell der Behälter aufweist. Über die Kennzeichnungseinrichtung wird der Benutzer intuitiv erfassbar darüber informiert und angeleitet, zu welchem Zweck die Bevorratungseinrichtungen vorgesehen sind. Beispielsweise können unterschiedliche Behälter für saubere oder unverbrauchte Reinigungsutensilien einerseits bzw. schmutzige oder verbrauchte Reinigungsutensilien andererseits vorgesehen sein.

Die Kennzeichnungseinrichtung kann zum Beispiel durch Farbgebung umgesetzt sein. Hierbei können zum Beispiel an den Bevorratungseinrichtungen farbige Kennzeichnungselemente angebracht oder anbringbar sein, wobei die Farbe mit dem Inhalt und/oder dem Zweck des Behälters verknüpft ist.

Die Bevorratungseinrichtungen, insbesondere die Behälter, können zum Beispiel ein Griffelement zum Ergreifen durch den Benutzer umfassen. Am Griffelement kann die Bevorratungseinrichtung vorzugsweise getragen und/oder relativ zum Rahmen verschoben werden. Das Griffelement ist zum Beispiel eine Griffleiste.

Von Vorteil kann es sein, wenn die Erstreckungen der Behälter in der Höhenrichtung Verhältnisse zueinander aufweisen, die durch Zweierpotenzen gegeben sind. Beispielsweise können Behälter mit Höhenverhältnis zwei oder mit Höhenverhältnis vier vorgesehen sein.

Alternativ oder ergänzend kann vorgesehen sein, dass die Erstreckungen der Behälter in der Höhenrichtung ganzzahlige Vielfache voneinander sind.

Von Vorteil ist es, wenn die Bevorratungseinrichtungen plattenförmige oder im Wesentlichen plattenförmige Aufstellelemente mit einer jeweiligen Aufstellfläche für Reinigungsutensilien umfassen. Auf dem Aufstellelement kann ein Reinigungsutensil platziert werden. Denkbar ist zum Beispiel, ein eimerförmiges Behältnis auf einem Aufstellelement zu platzieren.

Die Aufstellelemente können bei einer bevorzugten Ausführungsform Zwischenböden oder Trennböden eines Aufnahmeraums des Reinigungswagens sein.

Die Aufstellelemente können beispielsweise eine obenseitige, von einem Rand eingefasste Vertiefung umfassen, um einen verbesserten Stand von Reinigungsutensilien zu ermöglichen.

Günstig kann es insbesondere sein, wenn mindestens ein Aufstellelement ein Abdeckelement für einen Behälter ausbildet. Die Aufstellelemente können auf diese Weise zweierlei Funktionen aufweisen.

Vorgesehen sein kann zum Beispiel, dass ein Querschnitt des Aufstellelementes und des Behälters quer zu einer Höhenrichtung des Reinigungswagens gleich oder im Wesentlichen gleich sind, um den Behälter vollständig oder im Wesentlichen vollständig zu überdecken.

Von Vorteil ist es, wenn an mindestens einem Halteelement ein Aufstellelement und in einer Höhenrichtung darunter ein Behälter halterbar ist, wobei das Aufstellelement den Behälter bevorzugt unmittelbar überdeckt. Gesonderte Halteelemente für den Behälter und das diesem zugeordnete Aufstellelement als Abdeckung für den Behälter sind dadurch nicht erforderlich. Beispielsweise umfasst das Halteelement übereinander angeordnete Führungsglieder oder Halteglieder für den Behälter und das Aufstellelement, die als Nut oder Leiste ausgestaltet sind.

Die Halteelemente sind bei einer bevorzugten Ausführungsform Auszugführungen oder umfassen solche, die jeweils mindestens ein Führungsglied für die Bevorratungseinrichtungen, insbesondere die Behälter und/oder die Aufstellelemente, aufweisen, wobei eine jeweilige Bevorratungseinrichtung entlang des Führungsglieds von einer eingeschobenen Position in mindestens eine ausgezogene Position und umgekehrt verschiebbar ist. Beispielsweise kann ein Behälter und/oder ein Aufstellelement von der eingeschobenen Position im Aufnahmeraum des Reinigungswagens in die mindestens eine ausgezogene Position verschoben werden, um dem Benutzer den Zugriff auf Reinigungsutensilien zu erleichtern. Das Einschieben und Ausziehen kann insbesondere auch zur Montage bzw. Demontage der Bevorratungseinrichtungen dienen.

Vorgesehen sein kann, dass nicht alle Bevorratungseinrichtungen des Reinigungswagens wie vorstehend erläutert ausziehbar sind. Beispielsweise ist nur ein Teil der Bevorratungseinrichtungen ausziehbar.

Von Vorteil ist es, wenn die Bevorratungseinrichtung, insbesondere der Behälter und/oder das Aufstellelement, zur Einnahme von zwei ausgezogenen Stellungen ausgebildet ist und entlang des Führungsgliedes ausgehend von der eingeschobenen Stellung in zwei einander entgegengesetzte Richtungen in eine jeweilige ausgezogene Stellung überführbar ist. Dies erlaubt es zum Beispiel, auf die entsprechende Bevorratungseinrichtung von einander abgewandten Seiten des Reinigungswagens zuzugreifen. Zu diesem Zweck kann die Bevorratungseinrichtung in die jeweils gewünschte Richtung ausgezogen werden.

Die Bevorratungseinrichtungen, insbesondere die Behälter und/oder die Aufstellelemente können zum Beispiel Haltevorsprünge umfassen, die in die Führungsglieder eingreifen, wobei die jeweilige Bevorratungseinrichtung bevorzugt in der eingeschobenen und/oder der mindestens einen ausgezogenen Position mit dem Führungsglied verrastbar ist. Über die Verrastung können die Bevorratungseinrichtungen eine definierte Position am Rahmen einnehmen, was einem Benutzer die Handhabung des Reinigungswagens erleichtert.

Die Führungsglieder sind zum Beispiel nutförmig und die Haltevorsprünge leistenförmig.

Die Auszugführungen können bei einer konstruktiv einfachen Ausführungsform zum Beispiel als Kunststoffformteile ausgebildet sein.

Bei einer bevorzugten Ausführungsform können die Auszugführungen teleskopierbar sein.

Günstig ist es, dass die Bevorratungseinrichtungen, insbesondere die Behälter und/oder die Aufstellelemente, abhängig von der Orientierung der Halteelemente relativ zum Rahmen entlang zwei quer und insbesondere senkrecht zueinander ausgerichteten Richtungen relativ zum Rahmen ausziehbar sind. Beispielsweise kann die Auszugsrichtung je nach Reinigungsaufgabe und Vorliebe des Benutzers unterschiedlich sein. Die beiden Auszugsrichtungen sind zum Beispiel in einer gemeinsamen Ebene parallel zu einer Ebene des Rahmenunterteils angeordnet. Zum Beispiel können die Bevorratungseinrichtungen bezogen auf eine Verfahrrichtung des Reinigungswagens nach vorne und/oder nach hinten (weg vom Benutzer bzw. in Richtung auf den Benutzer) und bei andersartiger Orientierung der Halteelemente nach links und/oder nach rechts (bezogen auf die Verschieberichtung) ausziehbar sein.

Vorteilhafterweise besteht die Möglichkeit für den Benutzer, die Halteelemente relativ zum Rahmen entlang der ersten der zwei Orientierungen oder alternativ entlang der zweiten Orientierung auszurichten und an den Stützteilen festzulegen. Dies erlaubt es dem Benutzer, wahlweise entlang der ersten Orientierung oder entlang der zweiten Orientierung ausziehbare Bevorratungseinrichtungen umzusetzen.

Die Aufnahmeelemente sind vorzugsweise an jeweiligen Seiten der Stützteile angeordnet, die einem weiteren zu dem Stützteil beabstandeten Stützteil zugewandt sind, wobei insbesondere an zwei im Abstand zueinander angeordneten Stützteilen Aufnahmeelemente einander gegenüberliegend an den Stützteilen angeordnet sind. Hierbei besteht vorzugsweise insbesondere die Möglichkeit, die Halteelemente zwischen den Stützteilen zu positionieren, wobei an jedem Stützteil mindestens ein Halteelement angeordnet ist.

Ein jeweiliges Halteelement kann bei einer bevorzugten Ausführungsform der Erfindung mit einander abgewandten Endabschnitten an zwei voneinander beabstandeten Stützteilen gehalten sein. Ein jeweiliger Endabschnitt ist dabei an einem der Stützteile gehalten.

Die Halteelemente können vorzugsweise jeweils paarweise angeordnet sein, wobei einem in einer Höhenrichtung des Reinigungswagens am Rahmen angeordneten Halteelement ein korrespondierendes Halteelement gegenüberliegend am Rahmen zugeordnet ist. An den beiden Halteelementen kann beispielsweise eine ausziehbare Bevorratungseinrichtung wie zum Beispiel ein Behälter oder ein Aufstellelement gehalten sein.

In einer Draufsicht von oben ist der Rahmen vorzugsweise von quadratischer Form. Die Stützteile sind beispielsweise an den vier Ecken des gedachten Quadrates angeordnet.

Erfindungsgemäß sind die Halteelemente an den Aufnahmeelementen festlegbar, die an den Stützteilen angeordnet sind. Möglich ist dabei insbesondere eine Festlegung der Halteelemente direkt oder indirekt an den Stützteilen.

Bei einer bevorzugten Ausführungsform der Erfindung umfassen die Stützteile die Aufnahmeelemente oder bilden diese aus, wobei insbesondere die Aufnahmeelemente einteilig mit den Stützteilen gebildet sind. Dies gibt zum Beispiel die Möglichkeit, die Halteelemente direkt an den Stützteilen festzulegen.

Bei einer andersartigen bevorzugten Ausführungsform der Erfindung ist es günstig, wenn der Reinigungswagen die Aufnahmeelemente umfassende Aufnahmeteile umfasst, die separat von den Stützteilen gebildet und mit den jeweiligen Stützteilen verbunden sind. Dies gibt zum Beispiel die Möglichkeit, die Halteelemente indirekt, über die Aufnahmeteile, an den Stützteilen festzulegen.

Am jeweiligen Aufnahmeteil ist vorzugsweise eine Mehrzahl von Aufnahmeelementen angeordnet. Gesonderte Aufnahmeteile können dadurch eingespart werden, was die Herstellung des Reinigungswagens erleichtert.

Die Stützteile und die Aufnahmeteile können vorzugsweise hinsichtlich ihrer jeweiligen Funktion optimiert ausgebildet sein. Beispielsweise sind die Stützteile als Profilteile ausgeführt und/oder vorzugsweise aus einem robusten Material gefertigt, zum Beispiel Metall.

Die Aufnahmeteile können zum Beispiel leistenförmig ausgebildet sein und bevorzugt aus einem Kunststoffmaterial gefertigt sein.

Vorzugsweise können die Aufnahmeteile durch Kraft- und/oder Formschluss am jeweiligen Stützteil festgelegt sein.

Denkbar ist insbesondere eine Festlegung durch Verklemmen und/oder Verrasten.

Günstigerweise sind die Aufnahmeteile manuell und/oder werkzeuglos am jeweiligen Stützteil festlegbar.

Bei einer bevorzugten Ausführungsform der Erfindung sind die Aufnahmeteile in das jeweilige Stützteil einschiebbar. Beispielsweise kann das Stützteil eine nutförmige Ausnehmung oder Aufnahme aufweisen, in die das Aufnahmeteil eingeschoben werden kann, wobei es mit dem Stützteil in Eingriff steht.

Das Aufnahmeteil ist bevorzugt in einer Längsrichtung in das Stützteil einschiebbar und kann im bestimmungsgemäßen Gebrauch des Reinigungswagens beispielsweise in dessen Höhenrichtung erstreckt sein. Denkbar ist es, dass mehrere Aufnahmeteile am Stützteil festlegbar und insbesondere in dieses einschiebbar sind.

Von Vorteil ist es, wenn mindestens ein Halteelement zwei quer zueinander ausgerichtete und insbesondere senkrecht aneinandergrenzende Anlagebereiche umfasst, über welche das Halteelement, bevorzugt flächig, an korrespondierenden Anlagebereichen des Stützteils anliegt, oder an korrespondierenden Anlagebereichen eines die Aufnahmeelemente umfassenden Aufnahmeteiles. Auf diese Weise kann eine zuverlässige Relativorientierung des Halteelementes und der Aufnahmeelemente sichergestellt werden. Beispielsweise liegen das Stützteil oder das Aufnahmeteil und das Halteelement über Eck aneinander an, wobei die beiden Seiten aneinandergrenzen.

Vorzugsweise sind die Anlagebereiche flächig, um ein flanschartiges Anliegen des Halteelementes zu ermöglichen.

Die Halteelemente sind bevorzugt durch Kraft- und/oder Formschluss an den Aufnahmeelementen festlegbar.

Vorgesehen sein kann beispielsweise eine Verklemmung und/oder Verrastung der Halteelemente mit den Aufnahmeelementen.

Günstig ist es, wenn die Halteelemente lösbar an den Aufnahmeelementen festlegbar sind, so dass die Position der Halteelemente veränderbar ist und/oder nicht benötigte Halteelemente entfernt werden können.

Die Halteelemente sind bevorzugt manuell und/oder werkzeuglos an den Aufnahmeelementen festlegbar und/oder von diesen lösbar.

Bei einer bevorzugten Ausführungsform der Erfindung kann vorgesehen sein, dass die Halteelemente und die Aufnahmeelemente Haltevorsprünge und korrespondierende Eingriffsöffnungen für die Haltevorsprünge umfassen, die in einer Verbindungsstellung miteinander in Eingriff stehen.

Beispielsweise sind die Haltevorsprünge an den Halteelementen angeordnet, und die Aufnahmeelemente umfassen oder bilden die Eingriffsöffnungen.

Bevorzugt sind Vorspannelemente vorgesehen, entgegen deren Wirkung die Haltevorsprünge außer Eingriff mit den Eingriffsöffnungen bringbar sind. Beispielsweise ist einem jeweiligen Haltevorsprung ein Vorspannelement zugeordnet, um den Haltevorsprung in Richtung der Verbindungsstellung vorzuspannen. Dies sichert einen zuverlässigen Eingriff der Haltevorsprünge in die Eingriffsöffnungen. Entgegen der Wirkung des Vorspannelementes kann der Haltevorsprung bevorzugt von der Eingriffsöffnung gelöst werden.

Von Vorteil ist es, wenn die Halteelemente und die Aufnahmeelemente Ausrichtvorsprünge und korrespondierende Nuten für die Ausrichtvorsprünge umfassen, die im verbundenen Zustand der Halteelemente mit den Aufnahmeelementen in Eingriff stehen. Dies ermöglicht eine zuverlässige Relativausrichtung der Haltelemente zu den Aufnahmeelementen.

Beispielsweise sind die Ausrichtvorsprünge an den Halteelementen angeordnet und die Nuten an den Stützteilen oder an den Aufnahmeteilen.

Die Ausrichtvorsprünge oder Nuten sind vorzugsweise getrennt von den Haltevorsprüngen und den Eingriffsöffnungen gebildet.

Am Rahmenunterteil und/oder am Rahmenoberteil können beispielsweise Aufnahmen für die Stützteile gebildet sein, um die Montage des Reinigungswagens zu erleichtern.

Der Reinigungswagen kann wie bereits erwähnt einen Korpus umfassen, der vom Rahmen gebildet ist. Hierbei sind zum Beispiel Seitenwände und/oder Türen vorgesehen. Der Korpus fasst vorzugsweise einen Aufnahmeraum ein, in den die Bevorratungseinrichtungen angeordnet sein können.

Der Reinigungswagen kann dementsprechend mindestens eine Tür umfassen, die von einer Schließstellung in eine Öffnungsstellung und umgekehrt überführbar ist. Durch Öffnen der Tür kann zum Beispiel auf einen Aufnahmeraum des Korpus zugegriffen werden.

Die Tür umfasst bevorzugt eine Türwandung und Fixierteile, zwischen denen die Türwandung gehalten oder angeordnet ist, wobei die Fixierteile über Lagerelemente direkt oder indirekt am Rahmen schwenkbar gehalten sind. Die Lagerelemente der Fixierteile definieren günstigerweise eine Schwenkachse für die Tür. Die Schwenkachse verläuft vorzugsweise in einer Höhenrichtung des Reinigungswagens.

Ein Spannelement kann vorgesehen sein, um die Fixierteile relativ zueinander zu verspannen.

Am Rahmenunterteil und/oder am Rahmenoberteil kann bei einer bevorzugten Ausführungsform der Erfindung zum Beispiel ein korrespondierendes Lagerelement für ein Lagerelement am Fixierteil angeordnet oder gebildet sein.

Vorgesehen sein kann, dass an mindestens einem Halteelement ein Lagerelement korrespondierend zu einem Lagerelement eines Fixierteils angeordnet oder gebildet ist.

Der Befestigungsmechanismus für die Tür kann identisch oder funktionsgleich zum Befestigungsmechanismus für die Halteelemente ausgebildet sein. Beispielsweise sind Haltevorsprünge an der Tür und korrespondierende Eingriffsöffnungen am Rahmen angeordnet, die in einer Verbindungsstellung miteinander in Eingriff stehen. Auf die diesbezüglichen obigen Ausführungen wird verwiesen, auch im Hinblick auf die Vorspannelemente.

Die Tür ist bevorzugt in zwei verschiedenartigen Orientierungen und Positionen am Reinigungswagen anbringbar, in denen die Tür in voneinander weg weisenden Richtungen relativ zum Rahmen um parallele Schwenkachsen in die Öffnungsstellung überführbar ist. Dies verleiht dem Reinigungswagen eine hohe Vielseitigkeit. Hierbei kann vorgesehen sein, dass ein Benutzer die gewünschte Position der Tür (den "Türanschlag") am Reinigungswagen verändern kann.

Beispielsweise kann vorgesehen sein, dass der Benutzer die Tür zum Öffnen, wenn er vor dieser positioniert ist, nach links aufschwenkt ("Türanschlag links") oder nach rechts ("Türanschlag rechts").

Beispielsweise sind am Rahmenunterteil und/oder am Rahmenoberteil unterschiedliche Lagerelemente zu diesem Zweck vorgesehen. Alternativ oder ergänzend ist hierfür mindestens ein unterschiedliches Halteelement mit einem jeweiligen Lagerelement vorgesehen, um den Türanschlag zu verändern.

Vorzugsweise kann die Tür manuell und/oder werkzeuglos in ihrer Position am Rahmen verändert werden.

Am Rahmenoberteil ist bevorzugt eine Deckenwand angeordnet, die von einer Schließstellung in eine Öffnungsstellung überführbar ist und/oder die vom Rahmenoberteil entfernbar ist. Es kann sich hierbei eine Durchgriffsöffnung bilden, durch die hindurch von oben in den Aufnahmeraum eingegriffen werden kann. Alternativ oder ergänzend kann zum Beispiel ein Reinigungsutensil aus dem Aufnahmeraum nach oben durch die Durchgriffsöffnung hindurchragen.

Der Reinigungswagen ist bevorzugt handgeführt und umfasst eine Griffeinrichtung zum Ergreifen für einen Benutzer.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine perspektivische Ansicht des erfindungsgemäßen Reinigungswagens in bevorzugter Ausführungsform;
- Figur 2:: den Reinigungswagen aus Figur 1 nach Entfernen von Türen, Seitenwänden und einer Deckenwand;
- Figur 3:: den Reinigungswagen aus Figur 2 nach Entfernen von Behältern;

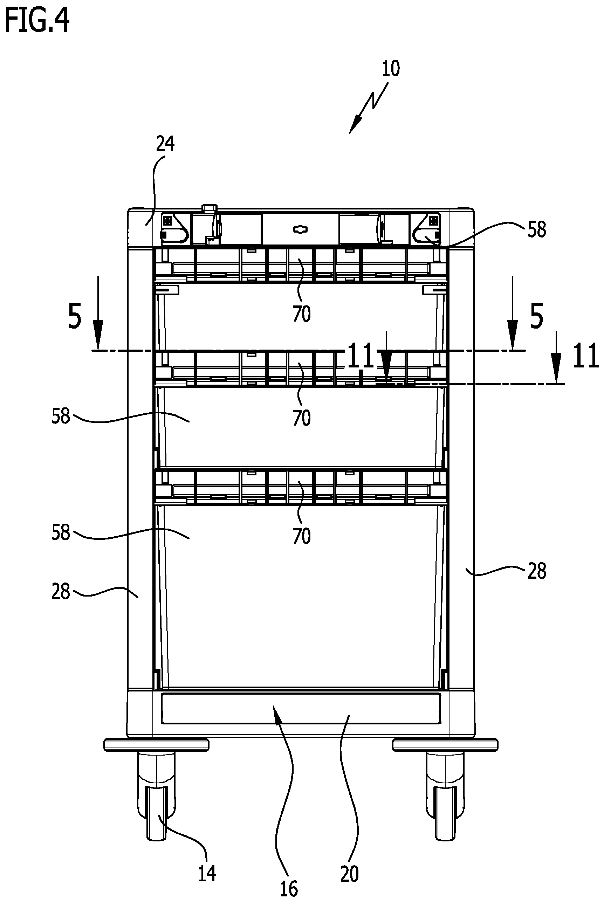

- Figur 4:: eine Seitenansicht des Reinigungswagens in Blickrichtung des Pfeiles "4" in Figur 3;
- Figur 5:: eine Schnittansicht längs der Linie 5-5 in Figur 4;
- Figur 6:: eine perspektivische Teilansicht gemäß Detail A in Figur 5 in einer Explosionsdarstellung, in der ein Stützteil und ein Aufnahmeteil des Reinigungswagens gezeigt sind;
- Figur 7:: eine perspektivische Darstellung des Aufnahmeteils;
- Figur 8:: eine vergrößerte Darstellung von Detail B in Figur 7;
- Figur 9:: eine perspektivische Darstellung eines Halteelementes des Reinigungswagens aus Figur 1;
- Figur 10:: eine vergrößerte Detaildarstellung in Blickrichtung des Pfeiles "10" in Figur 9;
- Figur 11:: eine Schnittansicht längs der Linie 11-11 in Figur 4;
- Figur 12:: eine vergrößerte Darstellung von Detail A in Figur 5;
- Figur 13:: eine Darstellung entsprechend Figur 12, wobei ein Halteelement eine andersartige Orientierung einnimmt;
- Figur 14:: eine Darstellung entsprechend Figur 2, wobei die Behälter ausgezogene Stellungen relativ zu einem Rahmen des Reinigungswagens einnehmen;
- Figur 15:: eine Darstellung ähnlich Figur 14, wobei die Behälter andersartige ausgezogene Stellungen einnehmen und Halteelemente für einen Behälter eine andersartige Orientierung aufweisen;
- Figur 16:: eine Darstellung ähnlich Figur 15, wobei zwei Behälter durch einen andersartigen Behälter ersetzt und Halteelemente entfernt wurden;
- Figur 17:: eine Draufsicht auf ein Rahmenunterteil des Reinigungswagens;
- Figur 18:: eine Unteransicht eines Rahmenoberteils des Reinigungswagens;
- Figur 19:: eine weitere perspektivische Darstellung des Reinigungswagens aus Figur 1 mit einer geöffneten Tür, teilweise als Explosionsdarstellung;
- Figur 20:: eine vergrößerte Darstellung von Detail C in Figur 19 in einer Explosionsansicht und vereinfacht;
- Figur 21:: eine vergrößerte Darstellung von Detail D in Figur 19 in einer Explosionsdarstellung und vereinfacht;
- Figur 22:: eine Darstellung ähnlich Figur 19, wobei die Tür mit abweichendem Türanschlag am Reinigungswagen angebracht ist und in einer Öffnungsstellung gezeigt ist;
- Figur 23:: eine weitere Darstellung des Reinigungswagens in Figur 1, wobei ein Segment einer Seitenwand entfernt und ein weiteres Segment der Seitenwand verschoben dargestellt ist;
- Figur 24:: eine vergrößerte Darstellung von Detail E in Figur 23;
- Figur 25:: eine vergrößerte Darstellung Detail F in Figur 23;
- Figur 26:: eine weitere bevorzugte Ausführungsform des erfindungsgemäßen Reinigungswagens in perspektivischer Darstellung;
- Figur 27:: eine vergrößerte Ansicht von Detail G in Figur 26 nach Entfernen einer Türwandung und teilweise als Explosionsdarstellung;
- Figur 28:: eine perspektivische Teildarstellung des Reinigungswagens in Blickrichtung des Pfeiles "18" in Figur 26;
- Figuren 29 und 30:: perspektivische Darstellungen einer weiteren bevorzugten Ausführungsform des erfindungsgemäßen Reinigungswagens; und
- Figur 31:: eine perspektivische Darstellung einer weiteren bevorzugten Ausführungsform des erfindungsgemäßen Reinigungswagens.

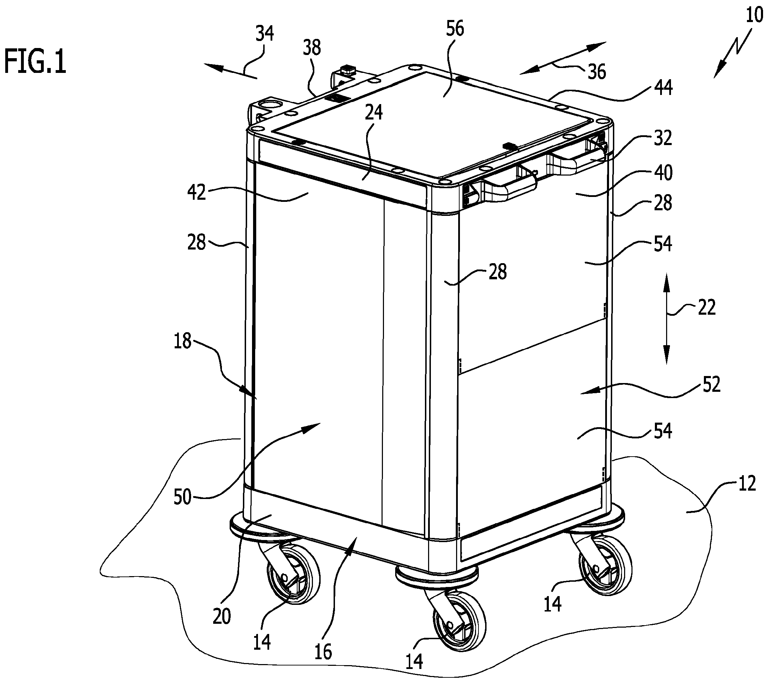

Figur 1 zeigt eine mit dem Bezugszeichen 10 belegte vorteilhafte Ausführungsform des erfindungsgemäßen Reinigungswagens. Der Reinigungswagen 10 dient zum Mitführen von Reinigungsutensilien für die insbesondere manuelle Reinigung, zum Beispiel von handgeführten Reinigungsmaschinen oder Reinigungswerkzeuge, Behältern für weitere Reinigungsutensilien oder Reinigungszubehör, Reinigungsflüssigkeiten oder Reinigungschemikalien, Reinigungsutensilien wie zum Beispiel Wischtücher, Behältern zur Aufnahme von Abfall etc.

Der Reinigungswagen 10 kann von einem Benutzer handgeführt auf einer Bodenfläche 12 verfahren werden. Es wird in Bezug auf Positions- und Orientierungsangaben ein bestimmungsgemäßer Gebrauch des Reinigungswagens 10 unterstellt. Hierbei steht der Reinigungswagen 10 über Rollen 14 auf der Bodenfläche 12 auf, die nicht-limitierend zum Beispiel als horizontal ausgerichtet angesehen werden können.

Der Reinigungswagen 10 umfasst einen Rahmen 16, der vorliegend einen Korpus 18 bildet. Der Rahmen 16 umfasst ein im Wesentlichen plattenförmiges Rahmenunterteil 20 und ein von diesem in einer Höhenrichtung 22 beabstandetes Rahmenoberteil 24. Das Rahmenoberteil 24 ist seinerseits rahmenförmig und bildet eine Durchgriffsöffnung 26.

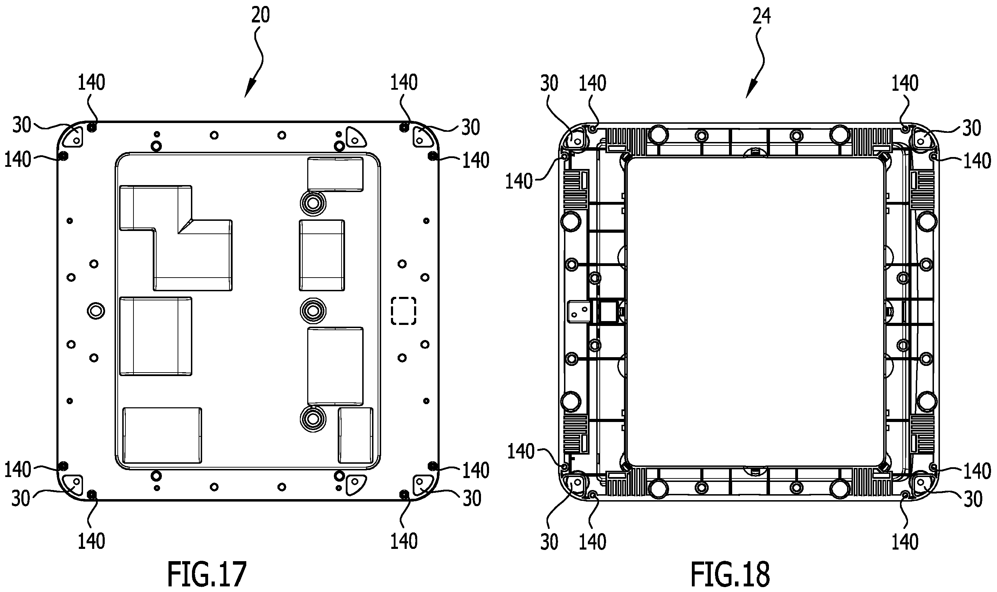

Das Rahmenunterteil 20 und das Rahmenoberteil 24 sind miteinander über Stützteile 28 verbunden, die an jeweiligen Eckbereichen des Rahmenunterteils 20 und des Rahmenoberteils 24 festgelegt sind. Zu diesem Zweck können am Rahmenunterteil 20 und am Rahmenoberteil 24 Aufnahmen 30 vorgesehen sein (Figuren 17 und 18), in die die Stützteile 28 einführbar sind. Die Stützteile 28 sind als Profilteile ausgebildet.

Vorliegend sind vier Stützteile 28 vorhanden, die jeweils voneinander beabstandet sind.

In der Draufsicht von oben ist der Rahmen 16 von quadratischer Form. Die Stützteile 28 sind dabei an den Ecken des gedachten Quadrates angeordnet.

Die Rollen 14 sind am Rahmenunterteil 20 gehalten und vorliegend als Lenkrollen ausgestaltet. Denkbar ist auch der Einsatz von ungelenkten Rollen.

Am Rahmenoberteil 24 ist eine Griffeinrichtung 32 für den Benutzer vorhanden, um den Reinigungswagen 10 zu verfahren. Üblicherweise kann dies in einer Vorwärtsbewegung entlang einer Verfahrrichtung 34 erfolgen. In der Verfahrrichtung 34 weist der Reinigungswagen 10 eine Vorderseite 38 auf. Die Griffeinrichtung 32 ist an der Rückseite 40 angeordnet.

Quer zur Verfahrrichtung 34 ist eine Querrichtung 36 ausgerichtet, wobei die Verfahrrichtung 34, die Querrichtung 36 und die Höhenrichtung 22 insbesondere paarweise senkrecht aufeinander stehen.

Weiter umfasst der Reinigungswagen 10 eine linke Seite 42 und eine rechte Seite 44.

Der Rahmen 16 definiert einen Aufnahmeraum 46, in dem Bevorratungseinrichtungen 48 für Reinigungsutensilien angeordnet sind. Der Aufnahmeraum 46 wird durch den Korpus 18 geschlossen. Hierzu umfasst der Reinigungswagen 10 zwei Türen 50, von denen in der Zeichnung nur eine Tür 50 an der linken Seite 42 dargestellt ist.

Darüber hinaus umfasst der Reinigungswagen zwei Seitenwände 52 (Figuren 1, 19, 22 und 23). Die Seitenwände 52 weisen jeweils übereinander angeordnete Segmente 54 auf.

Obenseitig umfasst der Reinigungswagen 10 eine Deckenwand 56, mit der die Durchgriffsöffnung 26 verschlossen werden kann. Die Deckenwand 56 kann insbesondere lösbar am Rahmenoberteil 24 festlegbar sein. Wünschenswert ist es insbesondere, wenn die Deckenwand 56 zum Beispiel am Rahmenoberteil 24 von einer Schließstellung in eine Öffnungsstellung und umgekehrt verschwenkbar ist.

Die Bevorratungseinrichtungen 48 sind zum Aufnehmen und/oder Abstellen von Reinigungszubehör ausgebildet und eingerichtet. Die Bevorratungseinrichtungen 48 umfassen vorliegend Behälter 58 und Aufstellelemente 60.

Die Behälter 58 stellen ihrerseits selbst Reinigungszubehör dar und sind eimerförmig oder wannenförmig ausgestaltet. Sie weisen einen Aufnahmeraum für Reinigungszubehör auf. In der Höhenrichtung 22 weisen die Behälter 58 vorliegend einen im Wesentlichen rechteckförmigen Querschnitt auf.

Der Reinigungswagen 10 kann insbesondere eine Mehrzahl von Behältern 58 umfassen. Hiervon können mindestens zwei Behälter 58 identisch und/oder mindestens zwei Behälter 58 unterschiedlich ausgestaltet sein.

Vorgesehen sein kann, dass der Reinigungswagen 10 mehr Behälter 58 umfassen kann, als angebracht und mitgeführt werden können. Je nach Zusammenstellung der Behälter 58 und in entsprechender Weise der Aufstellelemente 60 kann der Reinigungswagen 10 an Reinigungsaufgaben und/oder die Vorlieben des Benutzers angepasst werden.

Verschiedene Behälter 58 unterscheiden sich vorzugsweise lediglich durch die Erstreckung entlang der Höhenrichtung 22 und sind im Übrigen im Wesentlichen gleich ausgestaltet. Insbesondere kann beispielsweise der Querschnitt quer zur Höhenrichtung 22 identisch sein. Abweichend hiervon können höhere Behälter 58 beispielsweise eine stärkere Verjüngung aufgrund der größeren Höhe aufweisen.

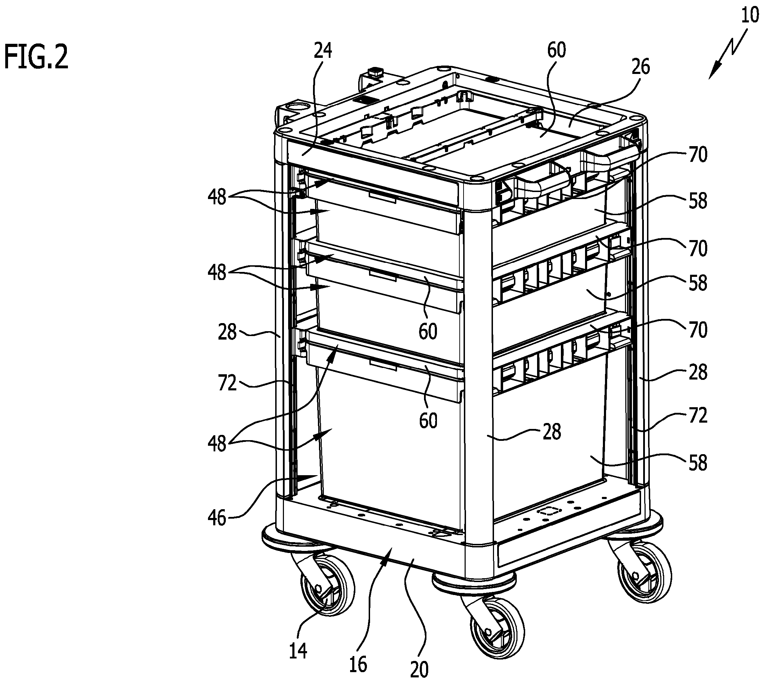

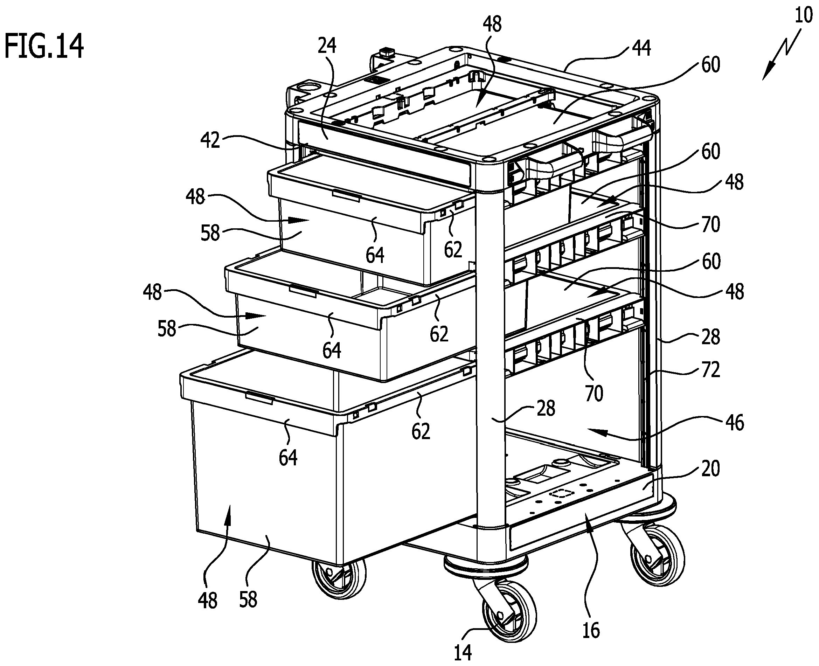

Am Beispiel der Figuren 2 und 14 ist gezeigt, dass der Reinigungswagen 10 zwei verschiedenartige Arten von Behältern 58 umfassen kann, nämlich einen hohen Behälter 58 und zwei weniger hohe Behälter 58.

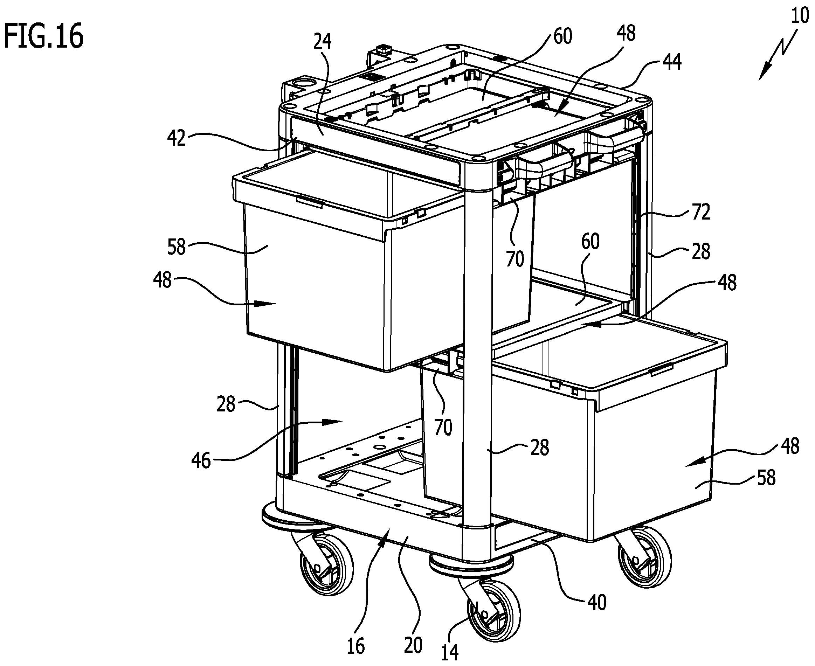

Vorgesehen sein kann, dass der Reinigungswagen 10 weitere Behälter 58 aufweisen kann. Das Beispiel der Figur 16 zeigt einen weiteren hohen Behälter 58.

Günstig ist es, wenn die Behälter 58, und in entsprechender Weise die Aufstellelemente 60, modulartig miteinander je nach Reinigungsaufgabe und/oder Vorliebe des Benutzers miteinander kombiniert werden können.

Dies wird durch die Art und Weise der Halterung der Bevorratungseinrichtungen 48 am Rahmen 16 ermöglicht.

Die Behälter 58 umfassen jeweils Haltevorsprünge 62 an einander gegenüberliegenden Seiten. Die Haltevorsprünge 62 sind leistenförmig gebildet.

Darüber hinaus umfassen die Behälter 58 vorliegend Griffelemente 64, ebenfalls an einander gegenüberliegenden Seiten und dort, wo die Haltevorsprünge 62 nicht angeordnet sind. Die Griffelemente 64 sind ebenfalls leistenförmig.

Der Reinigungswagen 10 kann eine Kennzeichnungseinrichtung zum Kennzeichnen der Behälter 58 umfassen. Die Kennzeichnungseinrichtung umfasst beispielsweise Kennzeichnungselemente, die an den Behältern 58 angebracht oder anbringbar sein können. Beispielsweise ist das Kennzeichnungselement am Griffelement 64 angeordnet. Die Kennzeichnungseinrichtung kann zum Beispiel durch Farbgebung umgesetzt sein.

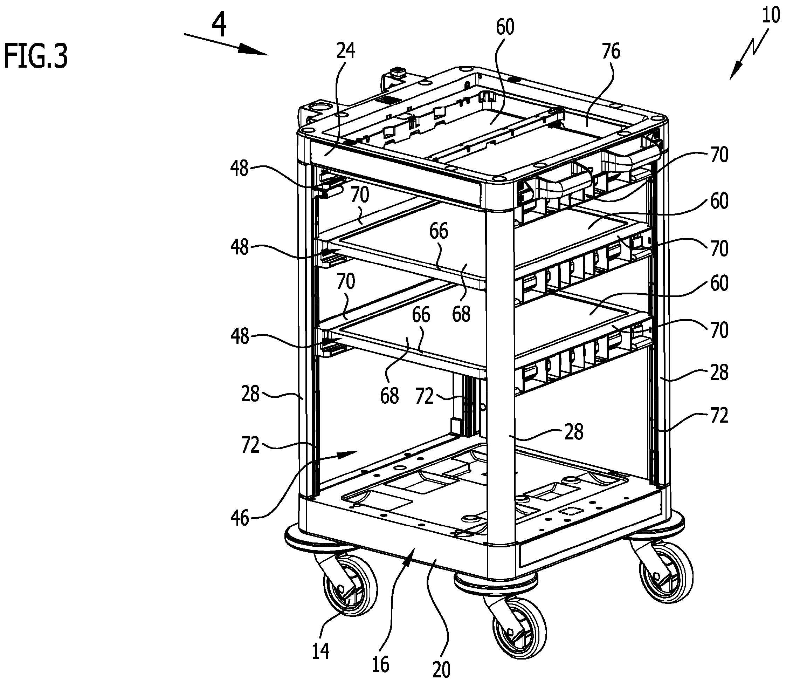

Die Aufstellelemente 60 sind, wie beispielsweise aus Figur 3 hervorgeht, plattenförmig gebildet. Dabei ist vorzugsweise an einer Oberseite eines jeweiligen Aufstellelementes 60 eine von einem Rand 66 eingefasste Vertiefung 68 mit einer Aufstellfläche für Reinigungsutensilien vorgesehen.

Die Stützteile 28 sind längserstreckt ausgestaltet und beispielsweise aus einem Metallmaterial gebildet. Außenseitig weisen die Stützteile 28 einen bogenförmigen Abschnitt 76 auf, der sich im Wesentlichen über einen Viertelkreis erstreckt. Vom Abschnitt 76 stehen zwei seitliche Abschnitte 78 an einer jeweiligen Seite des Stützteils 28 ab.

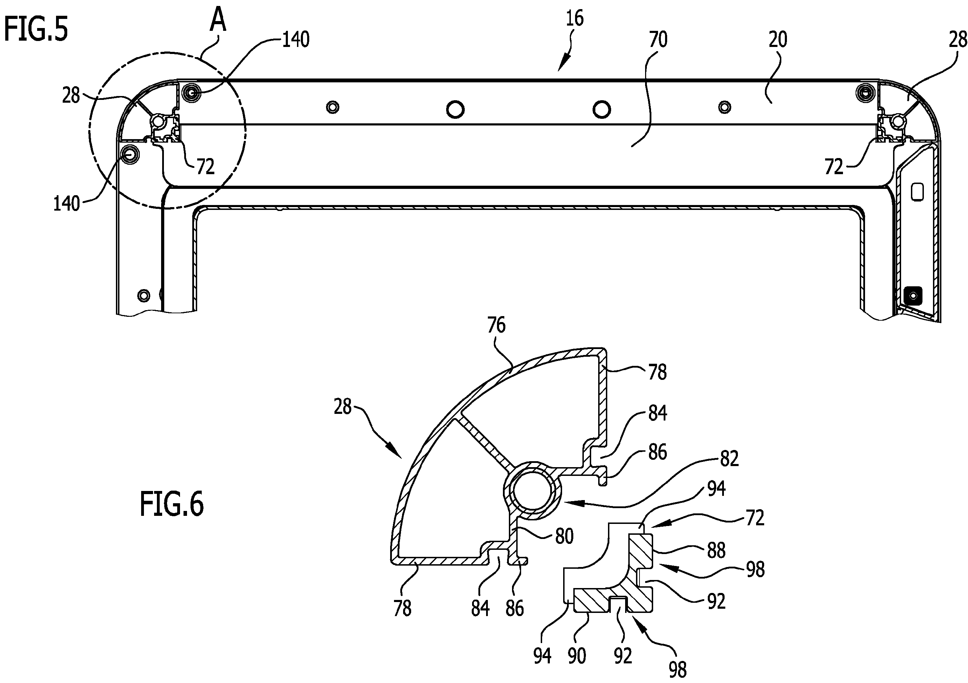

Dem Abschnitt 76 abgewandt gehen die Abschnitte 78 über in einen sie verbindenden Verbindungsabschnitt 80. Neben dem Verbindungsabschnitt 80 ist eine entlang der Erstreckung des Stützteils 28 nutförmige Aufnahme 82 gebildet. Die Abschnitte 78 weisen in Erstreckungsrichtung des Stützteils 28 ferner jeweils eine Nut 84 und einen Vorsprung 86 am Rand der nutförmigen Aufnahme 82 auf (Figur 6).

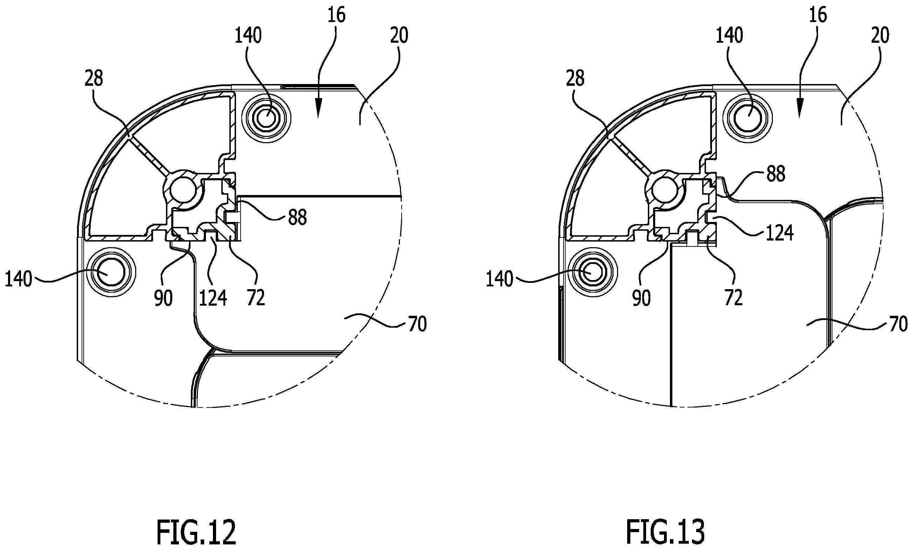

Um die Bevorratungseinrichtungen 48 am Rahmen 16 und insbesondere den Stützteilen 28 festzulegen, umfasst der Reinigungswagen 10 Halteelemente 70 und Aufnahmeteile 72, die Aufnahmeelemente 74 ausbilden und mit den Halteelementen 70 zusammenwirken. Nachfolgend wird unter Verweis insbesondere auf die Figuren 5 bis 8 sowie 11 bis 13 zunächst auf die Aufnahmeteile 72 eingegangen.

Das Aufnahmeteil 72 ist leistenförmig und erstreckt sich parallel zum Stützteil 28, ebenso wie dieses insbesondere in der Höhenrichtung 22.

Quer zur Höhenrichtung 22 weist das Aufnahmeteil 72 ungefähr einen L-förmigen Querschnitt auf mit einer ersten Seite 88 und einer zweiten Seite 90. An jeder Seite 88, 90 ist jeweils eine in Längsrichtung des Aufnahmeteils 72 laufende Nut 92 vorhanden.

Das Aufnahmeteil 72 umfasst einen Vorsprung 94 an jeder Seite 88, 90. Der Vorsprung 94 hintergreift den jeweiligen Vorsprung 86.

Das Aufnahmeteil 72 ist beispielsweise aus einem Kunststoffmaterial gefertigt und kann manuell und werkzeuglos mit dem Stützteil 28 verbunden werden. Dabei kann das Aufnahmeteil 72 zum Beispiel in Längsrichtung in das Stützteil 28 eingeschoben und an diesem festgelegt werden.

Vorliegend sind die Aufnahmeteile 72 so bemessen, dass an jedem Stützteil 28 zwei übereinander angeordnete Aufnahmeteile 72 gehalten sind.

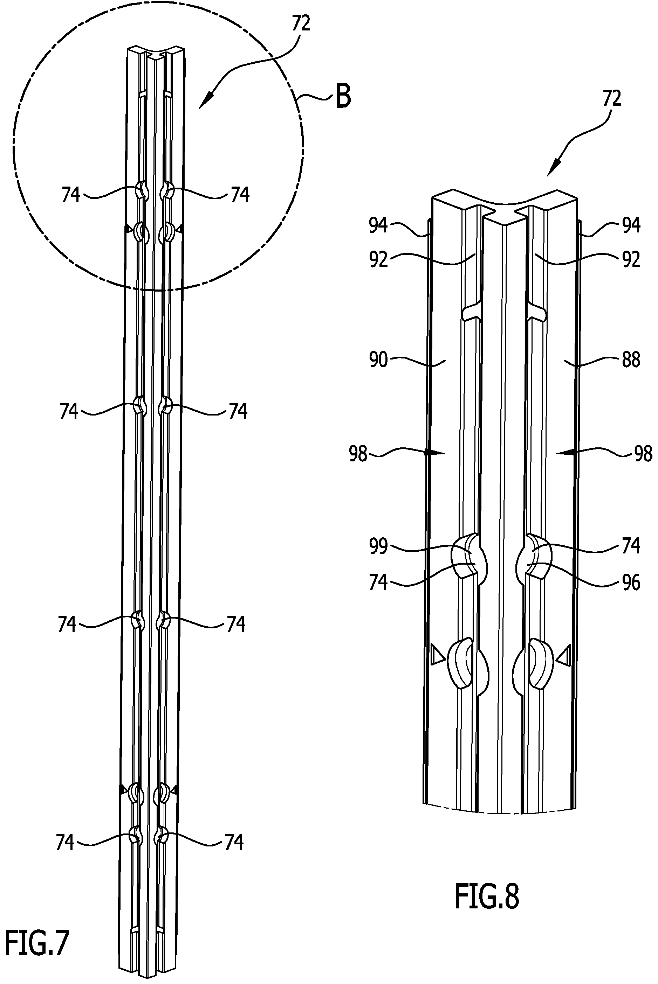

Die Aufnahmeelemente 74 sind am Aufnahmeteil 72 gebildet und jeweils als Eingriffsöffnungen 96 ausgestaltet (Figuren 7 und 8). Vorliegend sind entlang des Aufnahmeteils 72 jeweils eine Mehrzahl von Aufnahmeelementen 74 angeordnet. Diese sind insbesondere äquidistant zueinander positioniert.

Darüber hinaus sind die Aufnahmeelemente 74 so angeordnet, dass bei den beiden übereinander angeordneten Aufnahmeteilen 72 die jeweils benachbarten Aufnahmeelemente 74 denselben Abstand voneinander aufweisen wie an jedem der Aufnahmeteile 72. Es ergibt sich dadurch in der Höhenrichtung 22 ein Raster von Aufnahmeelementen 74.

An beiden Seiten 88 und 90 sind jeweils Aufnahmeelemente 74 angeordnet. Insbesondere sind diese in der Höhenrichtung 22 jeweils an derselben Stelle im Aufnahmeteil 72 gebildet.

Wie beispielsweise aus den Figuren 3 und 5 hervorgeht, sind die Aufnahmeteile 72 so an den beabstandeten Stützteilen 28 angeordnet, dass jeweils eine Seite 88 eines Aufnahmeteils 72 einer Seite 90 eines weiteren Aufnahmeteils 72 zugewandt ist. Die von diesen umfassten Aufnahmeelemente 74 sind beabstandet voneinander und liegen einander gegenüber.

Ferner sind die Aufnahmeelemente 74 an den Seiten der Stützteile 28 angeordnet, die jeweils durch die seitlichen Abschnitte 78 gebildet sind. Diese beiden Seiten der Stützteile 28 sind quer und insbesondere senkrecht zueinander ausgerichtet.

Die Seiten 88, 90 der Aufnahmeteile 72 sind quer und insbesondere senkrecht zueinander ausgerichtet und grenzen aneinander.

Eine jeweilige Seite 88, 90 weist außerhalb der Nut 92 einen Anlagebereich 98 auf, entlang der Erstreckung der Aufnahmeteile 72.

Die Halteelemente 70 sind im vorliegenden Fall als Auszugführungen 100 ausgebildet. Dabei sind die Halteelemente 70 leistenförmig gebildet mit einem ersten Endabschnitt 102 und einem zweiten Endabschnitt 104. An einem jeweiligen Endabschnitt 102, 104 kann das Halteelement 70 lösbar an zwei voneinander beabstandeten Stützteilen 28 festgelegt werden, wobei die Festlegung mittelbar über die Aufnahmeteile 72 mit den Aufnahmeelementen 74 erfolgt.

Das Halteelement 70 umfasst ein Führungsglied 106 für eine Seite eines Behälters 58, insbesondere dessen Haltevorsprung 62. Das Führungsglied 106 ist eine Nut 108, in die der Haltevorsprung 62 eingreift und darin gehalten ist. Das Führungsglied 106 erstreckt sich im Wesentlichen über die gesamte Länge des Halteelementes 70. Vorzugsweise kann der Behälter 58 in zumindest einer Stellung mit der Nut 108 verrastet werden.

Darüber hinaus umfasst das Halteelement 70 ein Führungsglied 110 zur Aufnahme des Randes 66 des Aufstellelementes 60. Das Führungsglied 110 ist vorliegend ebenfalls ausgestaltet als Nut 112, die sich im Wesentlichen über die gesamte Länge des Halteelementes 70 erstreckt. Vorzugsweise kann das Aufstellelement 60 in zumindest einer Stellung mit der Nut 112 verrastet werden.

Die Nuten 108, 112 verlaufen insbesondere parallel zueinander, wobei die Nut 112 für das Aufstellelement 60 oberhalb der Nut 108 für den Behälter 58 angeordnet ist.

Im bestimmungsgemäßen Gebrauch der Halteelemente 70 sind die Nuten 108, 112 insbesondere in einer Ebene quer und speziell senkrecht zur Höhenrichtung 22 ausgerichtet, insbesondere horizontal.

Im vorliegenden Fall sind die Auszugführungen 100 herstellungstechnisch einfach als Kunststoffformteile ausgebildet, die für die Führung der Bevorratungseinrichtungen 48 keine bewegten Teile umfassen. Bei einer andersartigen, in der Zeichnung nicht dargestellten Ausführungsform können die Auszugführungen 100 beispielsweise teleskopierbar sein.

An den Endabschnitten 102, 104 weist das Halteelement 70 jeweils einen Haltevorsprung 114 auf. Der Haltevorsprung 114 kann in einer Verbindungsstellung in die Eingriffsöffnung 96 des Aufnahmeelementes 74 eingreifen. Dies gibt die Möglichkeit, das Halteelement 70 am jeweiligen Aufnahmeelement 74 und damit mittelbar am Stützteil 28 festzulegen.

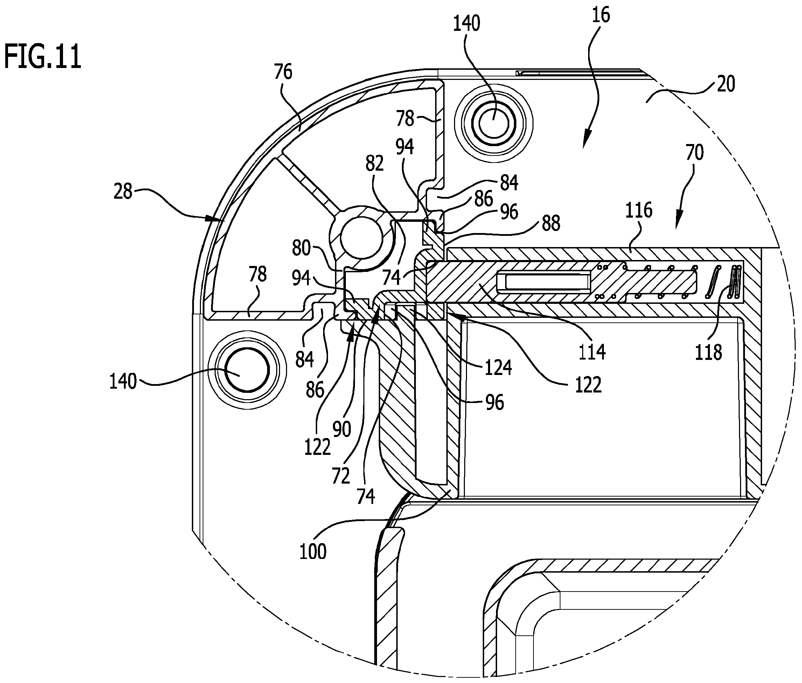

Wie insbesondere aus Figur 11 hervorgeht, ist der Haltevorsprung 114 verschieblich am Halteelement 70 angeordnet. Das Halteelement 70 bildet eine Hülse 116 zur Aufnahme des Haltevorsprungs 114. In der Hülse 116 ist ein Vorspannelement 118 angeordnet, vorliegend ausgestaltet als Schraubenfeder. Das Vorspannelement 118 beaufschlagt den Haltevorsprung 114 mit einer Kraft in Richtung der Verbindungsstellung und sichert dadurch dessen Eingriff mit dem Aufnahmeelement 74.

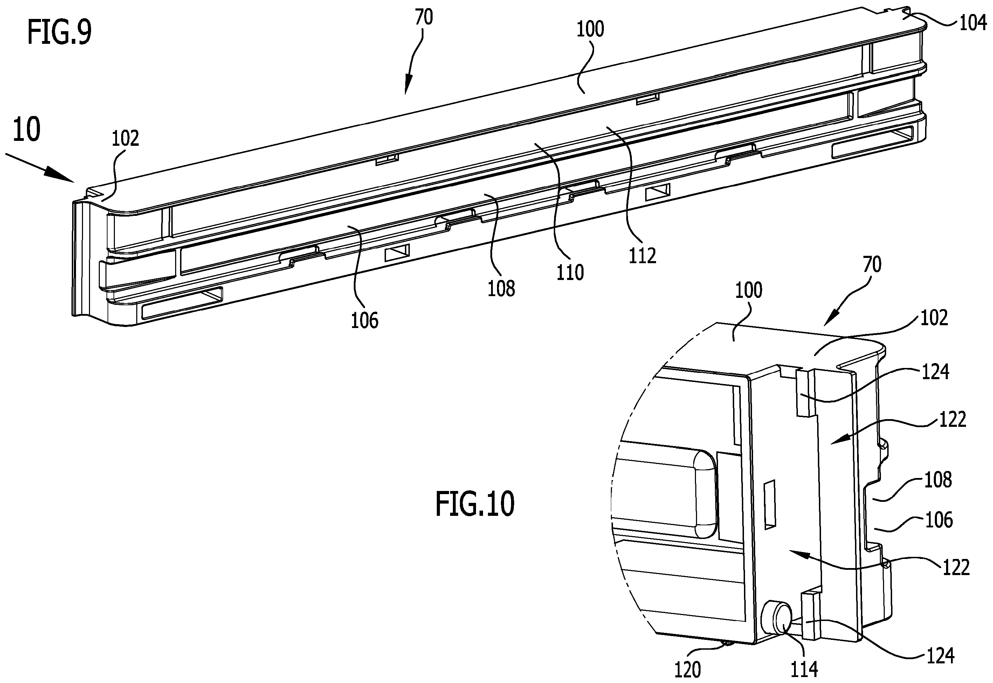

Entgegen der Wirkung des Vorspannelementes 118 kann der Haltevorsprung 114 in eine Lösestellung gebracht werden, in der der Eingriff mit dem Aufnahmeelement 74 aufgehoben ist. Das Halteelement 70 kann dadurch vom Aufnahmeteil 72 gelöst werden. Zum Verschieben des Haltevorsprungs 114 ist ein Betätigungsglied 120 vorgesehen (Figur 10).

An den Endabschnitten 102, 104 umfasst das Halteelement 70 zwei Anlagebereiche 122 zum Zusammenwirken mit den Anlagebereichen 98 am Aufnahmeteil 72. Die Anlagebereiche 122 sind quer zueinander ausgerichtet und grenzen insbesondere senkrecht aneinander. Ein erster Anlagebereich 122 kann an der Seite 88 flächig und flanschartig anliegen. Ein zweiter Anlagebereich 122 kann an der Seite 90 und zusätzlich am Vorsprung 86 flächig und flanschartig anliegen (Figuren 11 bis 13).

Das Halteelement 70 umfasst ferner mindestens einen Ausrichtvorsprung 124. Vorliegend sind zwei Ausrichtvorsprünge 124 an einem der Anlagebereiche 122 angeordnet. Es handelt sich hierbei um denjenigen Anlagebereich 122, an dem nicht der Haltevorsprung 114 positioniert ist (Figur 10). Die Ausrichtvorsprünge 124 können in die Nut 92 des Aufnahmeteils 72 eingreifen.

Die Halteelemente 70 können an den Aufnahmeelementen 74 auf benutzerfreundliche Weise manuell und werkzeuglos lösbar festgelegt werden. Aufgrund der in der Höhenrichtung 22 mehrfachen Aufnahmeelemente 74 besteht die Möglichkeit, die Halteelemente 70 und damit die Bevorratungseinrichtungen 48 unterschiedlich hoch am Rahmen 16 zu befestigen.

Darüber hinaus besteht die Möglichkeit, die Halteelemente 70 aufgrund der beidseitigen Anordnung der Aufnahmeelemente 74 wahlweise an den Seiten 88 und 90 der Aufnahmeteile 72 festzulegen. Dadurch besteht die Möglichkeit, die Halteelemente in einer ersten Orientierung oder in einer zweiten Orientierung von zwei möglichen Orientierungen an den Seiten der Stützteile 28 festzulegen. Diese Orientierungen sind quer und insbesondere senkrecht zueinander ausgerichtet und können insbesondere längs der Verfahrrichtung 34 und in Querrichtung 36 ausgerichtet sein.

Zum Haltern der Bevorratungseinrichtungen 48 kommen vorliegend die Halteelemente 70 jeweils paarweise zum Einsatz. Die Halteelemente 70 sind an einander gegenüberliegenden Stützteilen 28 festgelegt, wobei das Halteelement 70 mit jedem der Endabschnitte 102, 104 an einem der Stützteile 28 verbunden ist. Zwischen den Halteelementen 70 ist ein Behälter 58 und/oder ein Aufstellelement 60 im Aufnahmeraum 46 positionierbar.

Beispielsweise ist der Aufnahmeraum 46 bei der in den Figuren 1 bis 3, 14 und 15 dargestellten Konfiguration des Reinigungswagens so unterteilt, dass zwei niedrige Behälter 58 und ein hoher Behälter 58 aufgenommen werden. Zusätzlich werden jeweils Aufstellelemente 60 aufgenommen.

Die Aufstellelemente 60 können Zwischenböden des Aufnahmeraumes 46 bilden, beispielsweise in Abwesenheit von Behältern 58.

Darüber hinaus besteht die Möglichkeit, an einem jeweiligen Halteelement 70 ein Aufstellelement 60 und darunterliegend einen Behälter 58 zu halten, wie in der Zeichnung dargestellt. In diesem Fall bilden die Aufstellelemente 60 Abdeckelemente 126 für die Behälter 58 und überdecken diese im Wesentlichen vollständig. Die Abdeckelemente 126 weisen im Wesentlichen denselben Querschnitt auf wie die Behälter 58 am obenseitigen Rand.

Vorzugsweise besteht die Möglichkeit, dass die Abdeckelemente 126 Deckel für die Behälter 58 für den Transport außerhalb des Reinigungswagens 10 bilden.

Über die Führungsglieder 106 können die Behälter 58 ausgehend von einer eingeschobenen Stellung, in der sie im Aufnahmeraum 46 angeordnet sind (Figur 2), in mindestens eine ausgezogene Stellung verschoben werden. Die Verschiebung erfolgt an den Führungsgliedern 106 der Halteelemente 70. Beispielsweise sind in Figur 14 die drei Behälter 58 jeweils unterschiedlich weit aus dem Aufnahmeraum 46 in der Querrichtung 36 zur linken Seite 42 verschoben.

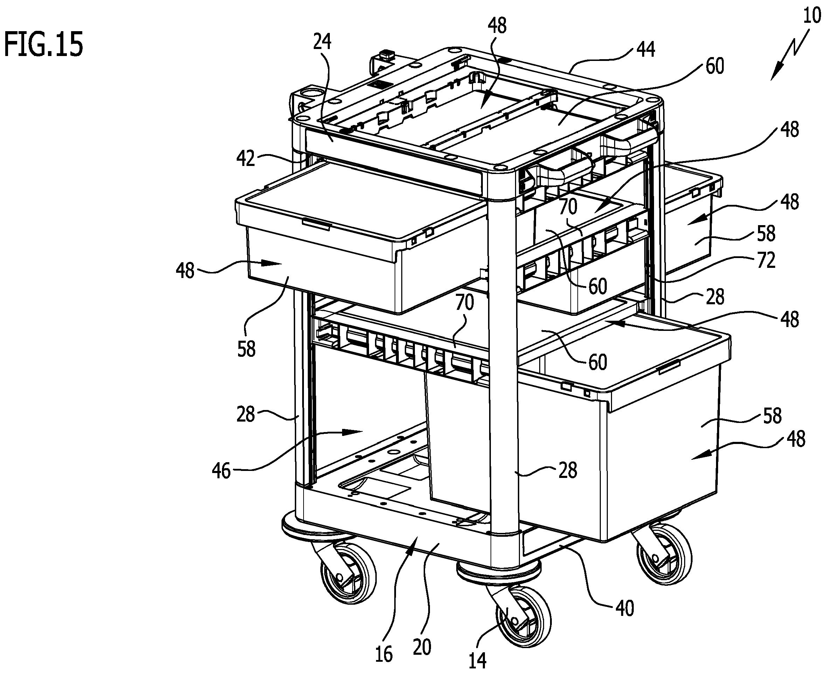

Vorteilhaft ist es, dass die Verschiebung entlang des Halteelementes 70 in einander entgegengesetzte Richtungen möglich ist. Beispielsweise zeigt Figur 15 eine Verschiebung der beiden kleinen Behälter 58 in voneinander unterschiedliche Orientierungen in der Querrichtung 36, nämlich einmal zur linken Seite 42 und einmal zur rechten Seite 44.

Je nachdem, auf welcher Seite der Reinigungswagen 10 eine Tür 50 aufweist und/oder ob die Tür 50 geöffnet ist, kann dadurch vielseitig und benutzerfreundlich auf den Inhalt der Behälter 58 zugegriffen werden.

Es versteht sich, dass dieser Vorteil auch dann erzielt werden kann, wenn der Reinigungswagen keine Seitenwände oder Türen aufweist.

Die Figuren 15 und 16 stellen eine weitere Konfiguration des Reinigungswagens 10 dar. Bei dieser Konfiguration sind zwei der Halteelemente 70 gegenüber der ursprünglichen Konfiguration in andersartiger Orientierung an den Stützteilen 28 angeordnet. Hierbei sind die Halteelemente 70 an den Aufnahmeelementen 74 der jeweils anderen Seiten 88, 90 festgelegt.

Abhängig davon, welche Orientierung die Halteelemente 70 relativ zum Rahmen einnehmen, sind die Bevorratungseinrichtungen 48 in der ersten Orientierung oder in der zweiten Orientierung verschiebbar und relativ zum Rahmen 16 ausziehbar. Die beiden Orientierungen sind im vorliegenden Beispiel quer und insbesondere senkrecht zueinander ausgerichtet.

Im vorliegenden Beispiel ist die Orientierung der Halteelemente 70 bei der in Figur 15 gezeigten Anordnung für den unteren Behälter 58 gegenüber der Orientierung der Halteelemente 70 bei der in Figur 14 gezeigten Anordnung um 90° gedreht. Dieses Beispiel verdeutlicht, wie der untere Behälter 58 abhängig von der Anordnung und Orientierung der Halteelemente 70 in unterschiedlichen Richtungen relativ zum Aufnahmeraum 46 verschoben werden kann.

Bei Fehlen von Seitenwänden oder geöffneten Türen kann bei der Anordnung gemäß Figur 15 eine Verschiebung längs der Verfahrrichtung 34 erfolgen. Auch in diesem Fall ist eine Verschiebung ausgehend von der eingeschobenen Stellung in zwei ausgezogene Stellungen in einander entgegengesetzte Richtungen möglich.

Figur 16 zeigt abweichend von Figur 15 eine unterschiedliche Bestückung des Reinigungswagens 10, wobei in diesem Fall zwei große Behälter 58 zum Einsatz kommen. In diesem Fall kann zum Beispiel das Paar von Halteelementen 70 für einen der kleinen Behälter 58 von den Aufnahmeteilen 72 entfernt werden.

Zwar sind in der Zeichnung nur die verschobenen Behälter 58 gezeigt. Jedoch besteht die Möglichkeit, auch die Aufstellelemente 60 ausgehend von einer eingeschobenen Stellung in unterschiedliche ausgezogene Stellungen zu verschieben. Hierbei erfolgt die Verschiebung entlang der Führungsglieder 110.

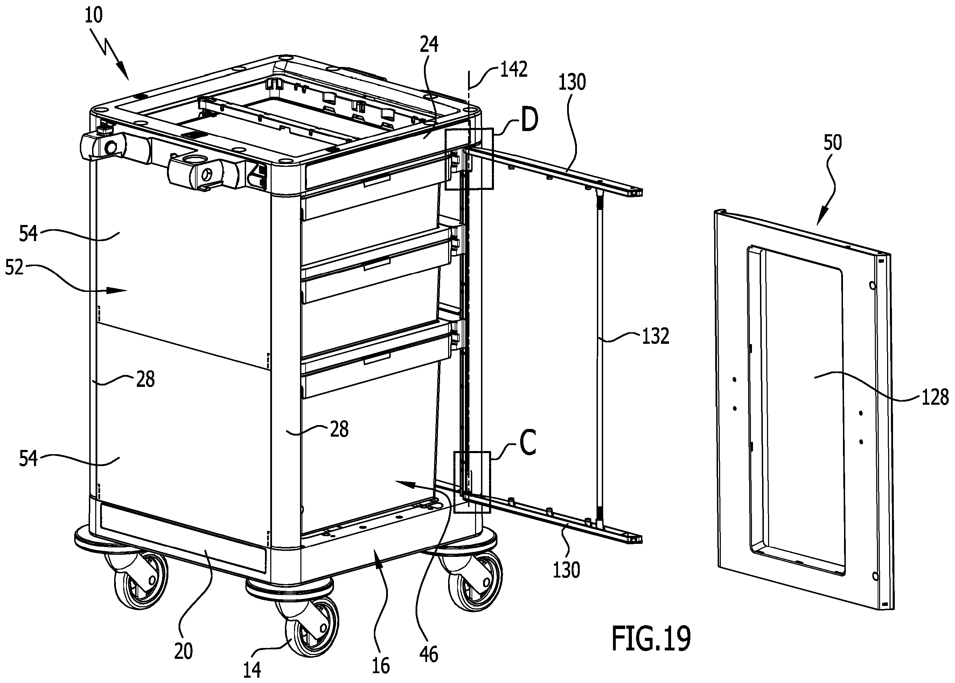

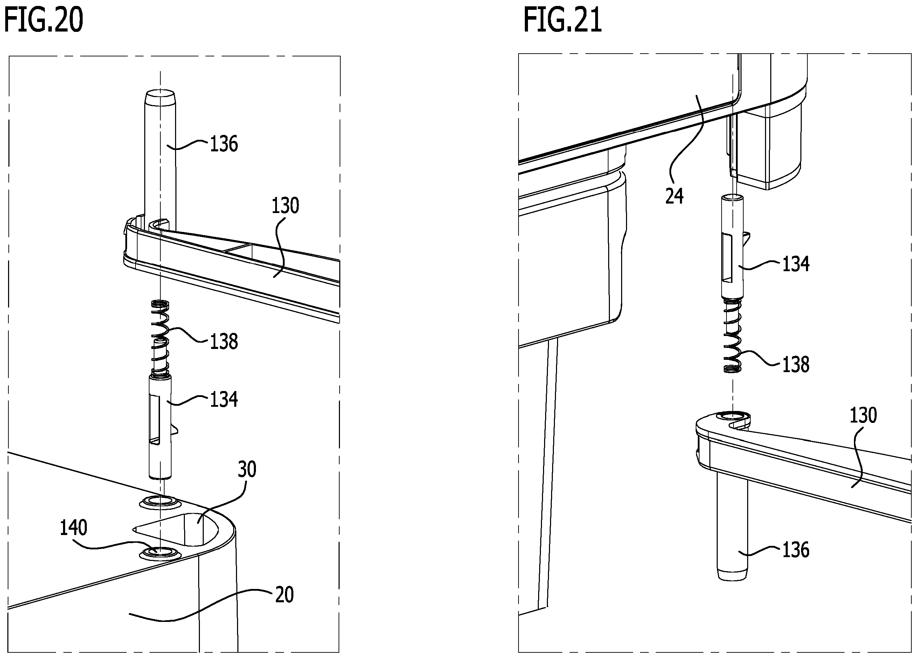

Wie insbesondere aus den Figuren 19 bis 22 hervorgeht, umfasst die bereits erwähnte Tür 50 eine Türwandung 128 und zwei in der Höhenrichtung 22 im Abstand zueinander angeordnete Fixierteile 130. Die Fixierteile 130 sind leistenförmig gebildet und nehmen die Türwandung 128 zwischen sich auf. Ein Spannelement 132 ist auf Druck gespannt und verspannt die Fixierteile 130 relativ zueinander.

An einer Endseite jedes Fixierteils 130 ist ein stiftförmiges Lagerelement 134 angeordnet. Das Lagerelement 134 ist in einer Hülse 136 aufgenommen und mittels eines in der Hülse 136 angeordneten Vorspannelementes 138, vorliegend einer Schraubenfeder, gegen den Rahmen 16 vorgespannt.

Korrespondierende Lagerelemente 140 in Gestalt von Eingriffsöffnungen sind am Rahmenunterteil 20 und am Rahmenoberteil 24 angeordnet (Figuren 17 und 18).

Die Lagerelemente 134 beider Fixierteile 130 stehen mit den Lagerelementen 140 in Eingriff, um eine Schwenkachse 142 für die Tür 50 zu definieren.

Der Befestigungsmechanismus für die Tür 50 ist vorzugsweise identisch oder funktionsgleich zum Befestigungsmechanismus für die Halteelemente 70 ausgestaltet.

Die Tür 50 kann von einer Schließstellung, indem sie den Aufnahmeraum 46 an einer Seite verschließt, in eine Öffnungsstellung überführt werden, in der ein Benutzer Zugriff auf den Aufnahmeraum 46 und insbesondere die Bevorratungseinrichtungen 48 hat.

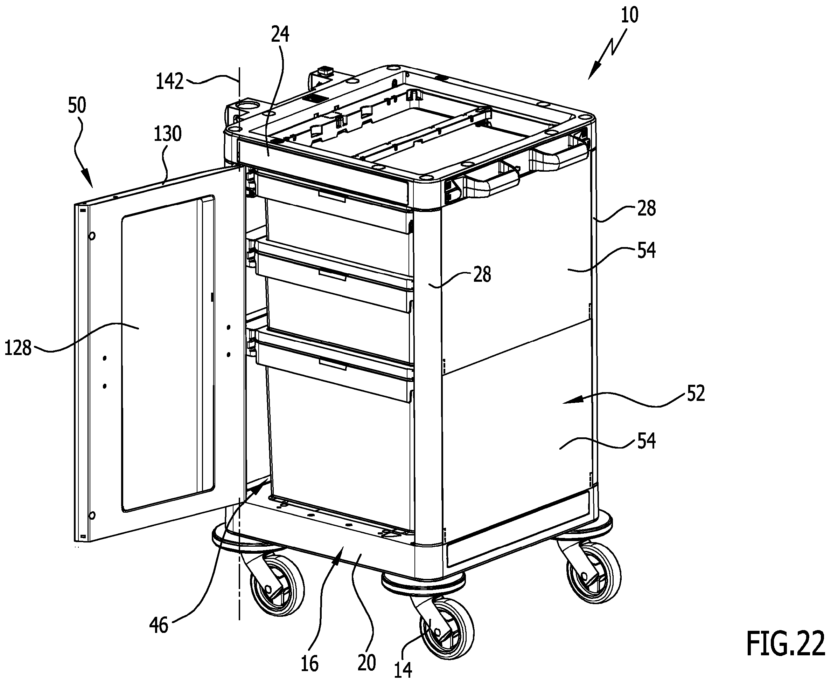

Die Lagerelemente 140 sind für jede der Seiten 38 bis 44 doppelt vorhanden und an zwei Positionen angeordnet. Dies gibt die Möglichkeit, die Tür 50 an jeder Seite 38 bis 44 an zwei Positionen in unterschiedlicher Orientierung am Rahmen 16 festzulegen. Beispielhaft ist dies im Vergleich zur Figur 19 mit geändertem Türanschlag in Figur 22 dargestellt. Dabei ist die Tür 50 zum einen an der linken Seite 42 von nahe der Rückseite 40 zu nahe der Vorderseite 38 verschoben und zum anderen um eine in Querrichtung 36 verlaufende Horizontalachse gedreht. Figur 22 stellt die Tür 50 in einer Öffnungsstellung dar.

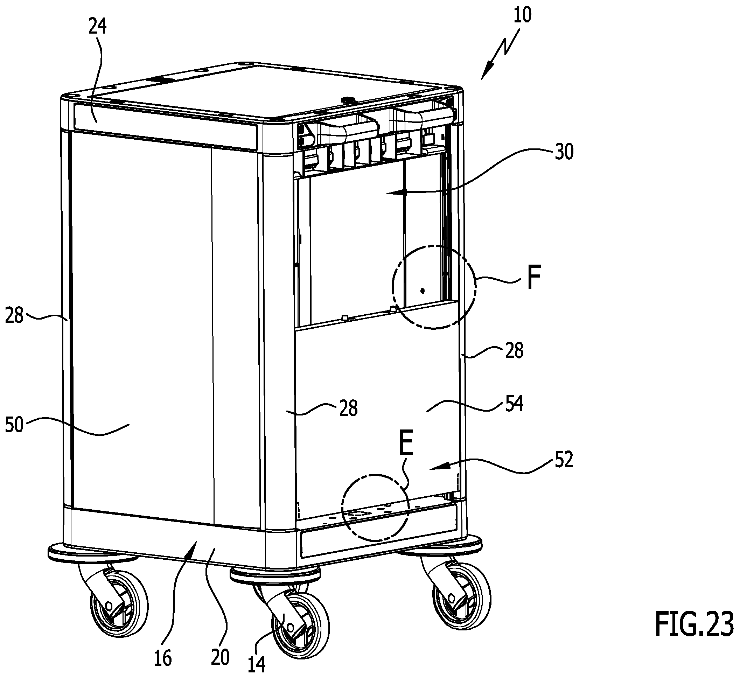

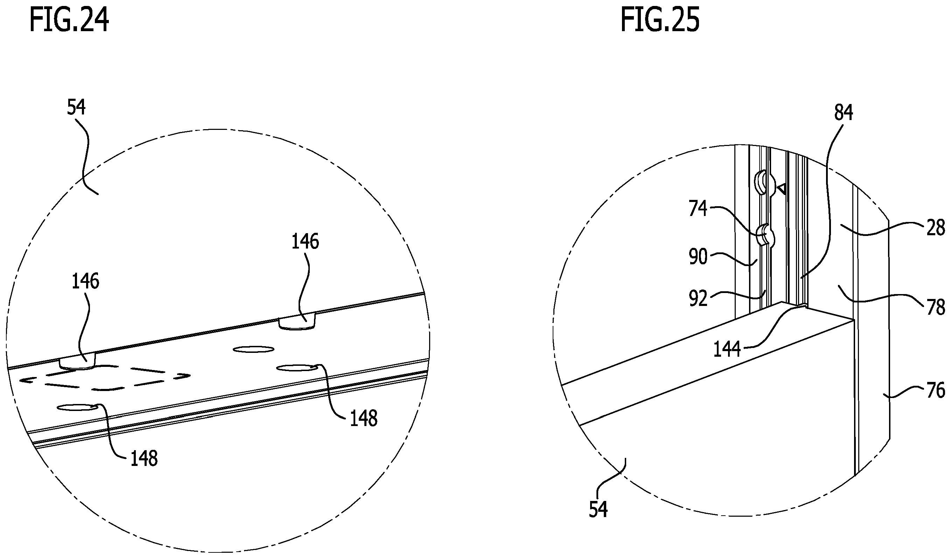

Die Segmente 54 der Seitenwand 52 können konstruktiv einfach an den Stützteilen 28 gehalten werden (Figuren 23 bis 25). Zu diesem Zweck sind an den Segmenten 54 leistenförmige Vorsprünge 144 an einander abgewandten Seiten angeordnet. Die Vorsprünge 144 können in die Nuten 84 eingreifen (Figur 25). Beispielsweise werden die Segmente 54 von oben in die Stützteile 28 eingeschoben, bevor das Rahmenoberteil 24 montiert wird.

In Richtung auf das Rahmenunterteil 20 und das Rahmenoberteil 24 weist ein jeweiliges Segment 54 mindestens einen Vorsprung 146 auf (vorliegend sind es derer zwei), der in eine korrespondierende Eingriffsöffnung 148 am Rahmenunterteil 20 und am Rahmenoberteil 24 eingreift. Die Figuren 23 und 24 zeigen dies bei einem etwas in Höhenrichtung 22 verschobenen Segment 54. Durch den Eingriff der Vorsprünge 146 in die Eingriffsöffnungen 148 wird ein Klappern der Segmente 54 vermieden, was sich als angenehm für die Arbeit mit dem Reinigungswagen 10 erweist.

Die Segmente 54 stehen ihrerseits vorzugsweise ebenfalls miteinander in Eingriff. Die Figur 23 zeigt beispielsweise korrespondierende Vorsprünge und Eingriffsöffnungen an einem jeweiligen Segment 54.

Die Segmente 54 können ebenso wie die Türen 50 an jeder Seite 38 bis 44 angebracht werden.

Nachfolgend wird auf weitere bevorzugte Ausführungsformen des erfindungsgemäßen Reinigungswagens eingegangen. Die bereits im Zusammenhang mit dem Reinigungswagen 10 erläuterten Vorteile können bei diesen Reinigungswagen ebenfalls erzielt werden. Zur Vermeidung von Wiederholungen wird auf obige Ausführungen verwiesen. Es wird lediglich auf die wesentlichen Unterschiede eingegangen.

Für gleiche oder gleichwirkende Merkmale und Bauteile werden identische Bezugszeichen benutzt.

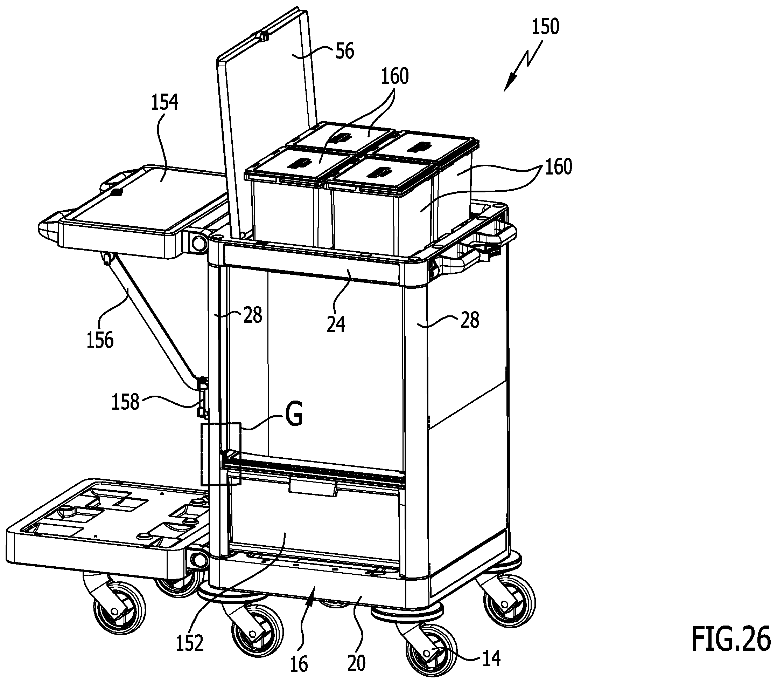

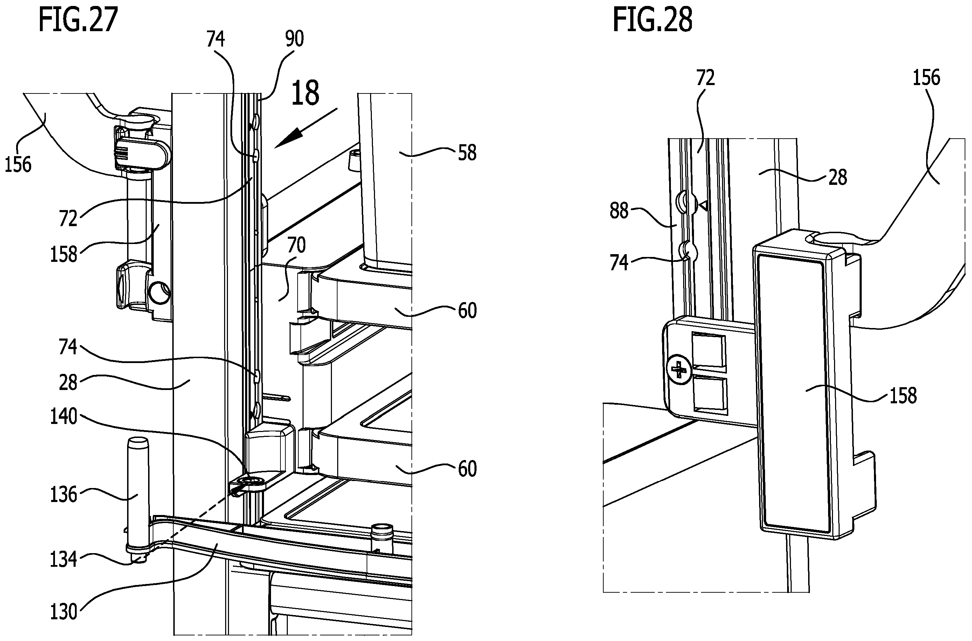

Bei einem in Figur 26 gezeigten Reinigungswagen 150 ist ebenfalls eine Tür 50 vorhanden. Die Tür 50 weist in der Höhenrichtung 22 eine Erstreckung auf, die geringer ist als der Abstand des Rahmenunterteils 20 vom Rahmenoberteil 24. Unterhalb der Tür 50 ist im Aufnahmeraum 46 eine Schublade 152 positioniert. Wie insbesondere aus Figur 27 hervorgeht, ist ein zum Lagerelement 134 korrespondierendes Lagerelement beim Reinigungswagen 150 an einem der Halteelemente 70 angeordnet. Beispielsweise ist das Lagerelement 140 an einen der Endabschnitte 102, 104 angeformt.

Beim Reinigungswagen 150 ist obenseitig ferner ein mit dem Rahmenoberteil 24 verbundenes Aufstellelement 154 vorgesehen. Das Aufstellelement 154 ist über Strebenelemente 156 mit dem Rahmen 16 verbunden. Die Zeichnung zeigt hiervon ein Strebenelement 156 in Figur 26.

Zur Verbindung des Strebenelementes 156 kommt ein Halteteil 158 zum Einsatz. Das Halteteil 158 greift am Strebenelement 156 an und ist mit dem Aufnahmeteil 72 zum Beispiel durch Verschraubung verbunden (Figur 28).

Beim Reinigungswagen 150 ist die Deckenwand 56 in einer geöffneten Stellung dargestellt. Ein Aufstellelement 60 ist so positioniert, dass Behälter 160 darauf aufgestellt werden können und durch die Durchgriffsöffnung 26 nach oben aus dem Aufnahmeraum 46 ragen. Auf diese Weise kann der Benutzer handhabungsfreundlich auf die Behälter 160 zugreifen.

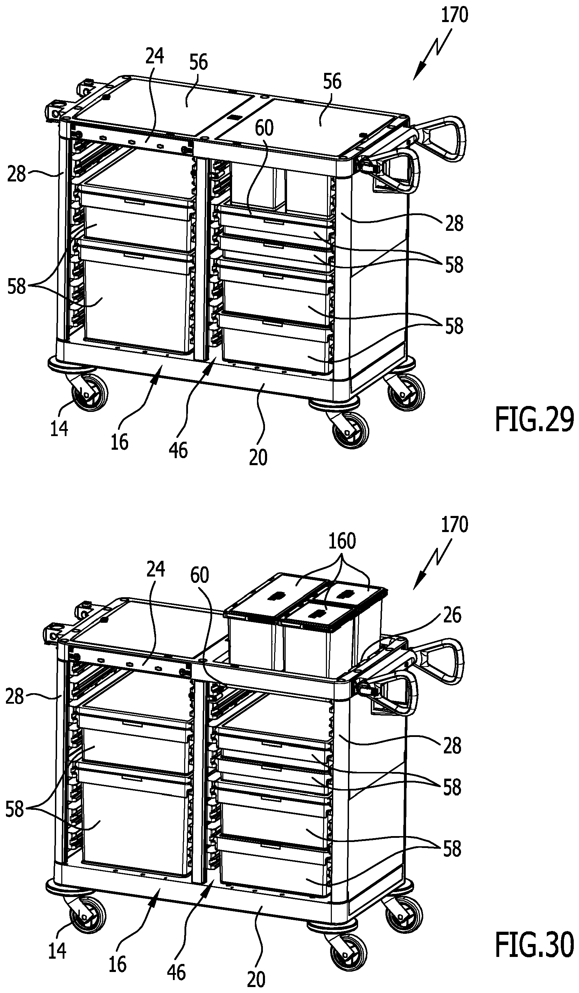

Die Figuren 29 und 30 zeigen einen insgesamt mit dem Bezugszeichen 170 belegten erfindungsgemäßen Reinigungswagen in bevorzugter Ausführungsform.

Beim Reinigungswagen 170 sind vorliegend an der linken Seite 42 keine Türen angeordnet.

Im Aufnahmeraum 46 sind Behälter 58 verschiedenartiger Größe aufgenommen. Hierbei sind insbesondere Behälter 58 vorgesehen, deren Erstreckungen in der Höhenrichtung 22 Verhältnisse von Zweierpotenzen bilden.

Der Reinigungswagen 170 umfasst zwei Behälter 58 geringer Höhe, drei Behälter 58 mit jeweils doppelter Höhe und einen Behälter 58 mit nochmals doppelter Höhe.

Die Figuren 29 und 30 zeigen auch, dass überzählige Halteelemente 70 an den Aufnahmeteilen 72 festgelegt und in diesem Fall ungenutzt sind. Es ist insbesondere ein Raster von Halteelementen 70 in der Höhenrichtung 22 vorgesehen, das je nach Wunsch mit Behältern 58 und Aufstellelementen 60 bestückt werden kann.

Bei der in Figur 29 gezeigten Konfiguration ist ein Aufstellelement 60 vorgesehen, auf dem Reinigungsutensilien in Gestalt von Behältern 160 positioniert sind. Dabei ist das Aufstellelement 60 so angeordnet, dass die Behälter 160 bei geschlossener Deckenwand 56 obenseitig überdeckt sind (Figur 29).

Figur 30 stellt demgegenüber eine andersartige Konfiguration des Reinigungswagen 170 dar. In diesem Fall ist die Deckenwand 56 unter Freigabe der Durchgriffsöffnung 26 entfernt. Das Aufstellelement 60 ist, wie beim Reinigungswagen 150, so hoch positioniert, dass die Behälter 160 durch die Durchgriffsöffnung 26 ragen und dadurch vom Benutzer einfacher erreicht werden können.

Bei der Konfiguration gemäß Figur 29 könnte beispielsweise vorgesehen sein, die oberhalb der Behälter 160 angeordnete Deckenwand 56 zu öffnen, beispielsweise durch Verschwenkung wie beim Reinigungswagen 150. In diesem Fall kann der Benutzer durch die Durchgriffsöffnung 26 auf die Behälter 160 zugreifen.

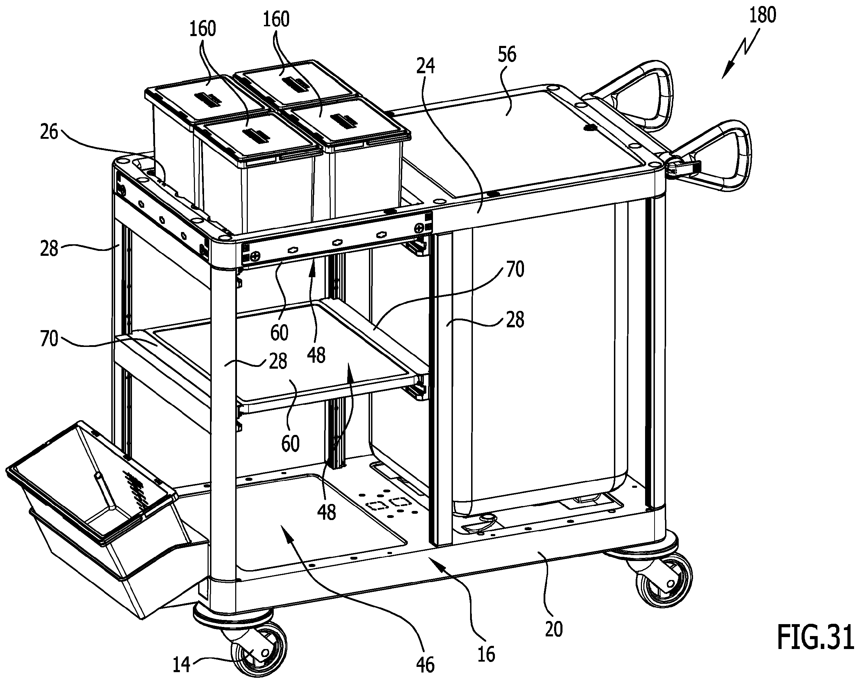

Figur 31 zeigt einen mit dem Bezugszeichen 180 belegten erfindungsgemäßen Reinigungswagen in bevorzugter Ausführungsform.

Beim Reinigungswagen 180 ist der Rahmen 16 ohne Vorhandensein eines Korpus 18 geöffnet. Außerdem entfallen die Behälter 58.

Im Aufnahmeraum 46 sind in diesem Fall lediglich Aufstellelemente 60 vorgesehen, auf denen Reinigungsutensilien positioniert werden können. Beispielsweise ist ein Aufstellelement 60 als Zwischenboden und ein weiteres Aufstellelement 60 wie bei den Reinigungswagen 150, 170 obenseitig zur Aufnahme von Behältern 160 positioniert.

Durch die Nutzung der Halteelemente 70 mit Führungsgliedern 106 für die Behälter 58 ist es beim Reinigungswagen 180 ohne weiteres möglich, bei Bedarf Behälter 58 aufzunehmen.

### Bezugszeichenliste:

- 10: Reinigungswagen
- 12: Bodenfläche
- 14: Rolle
- 16: Rahmen
- 18: Korpus
- 20: Rahmenunterteil
- 22: Höhenrichtung
- 24: Rahmenoberteil
- 26: Durchgriffsöffnung
- 28: Stützteil
- 30: Aufnahme
- 32: Griffeinrichtung
- 34: Verfahrrichtung
- 36: Querrichtung
- 38: Vorderseite
- 40: Rückseite
- 42: linke Seite
- 44: rechte Seite
- 46: Aufnahmeraum
- 48: Bevorratungseinrichtung
- 50: Tür
- 52: Seitenwand
- 54: Segment
- 56: Deckenwand
- 58: Behälter
- 60: Aufstellelement
- 62: Haltevorsprung
- 64: Griffelement
- 66: Rand
- 68: Vertiefung
- 70: Halteelement
- 72: Aufnahmeteil
- 74: Aufnahmeelement
- 76: bogenförmiger Abschnitt
- 78: Abschnitt
- 80: Verbindungsabschnitt
- 82: Aufnahme
- 84: Nut
- 86: Vorsprung
- 88: erste Seite
- 90: zweite Seite
- 92: Nut
- 94: Vorsprung
- 96: Eingriffsöffnung
- 98: Anlagebereich
- 100: Auszugführung
- 102: Endabschnitt
- 104: Endabschnitt
- 106: Führungsglied
- 108: Nut
- 110: Führungsglied
- 112: Nut
- 114: Haltevorsprung
- 116: Hülse
- 118: Vorspannelement
- 120: Betätigungsglied
- 122: Anlagebereich
- 124: Ausrichtvorsprung
- 126: Abdeckelement
- 128: Türwandung
- 130: Fixierteil
- 132: Spannelement
- 134: Lagerelement
- 136: Hülse
- 138: Vorspannelement
- 140: Lagerelement
- 142: Schwenkachse
- 144: Vorsprung
- 146: Vorsprung
- 148: Eingriffsöffnung
- 150: Reinigungswagen
- 152: Schublade
- 154: Aufstellelement
- 156: Strebenelement
- 158: Halteteil
- 160: Behälter
- 170: Reinigungswagen
- 180: Reinigungswagen

## Patentansprüche

1. Reinigungswagen umfassend
einen Rahmen (16) mit einem Rahmenunterteil (20), einem Rahmenoberteil (24) und Stützteilen (28), die das Rahmenunterteil (20) mit dem Rahmenoberteil (24) verbinden und voneinander beabstandet sind, Rollen (14) am Rahmenunterteil (20) zum Verfahren auf einer Bodenfläche (12),
Bevorratungseinrichtungen (48) zum Aufnehmen und/oder Abstellen von Reinigungszubehör,
Halteelemente (70) zum Haltern der Bevorratungseinrichtungen (48) und an den Stützteilen (28) angeordnete Aufnahmeelemente (74) in vordefinierter Position,
wobei die Halteelemente (70) an den Aufnahmeelementen (74) zur Einnahme unterschiedlicher Relativpositionen der Bevorratungseinrichtungen (48) zu den Stützteilen (28) wahlweise festlegbar sind,
**dadurch gekennzeichnet, dass** die Bevorratungseinrichtungen (48) abhängig von der Orientierung der Halteelemente (70) relativ zum Rahmen (16) entlang zwei quer und insbesondere senkrecht zueinander ausgerichteten Richtungen relativ zum Rahmen (16) ausziehbar sind.

2. Reinigungswagen nach Anspruch 1, **dadurch gekennzeichnet, dass** zumindest eines der Folgenden gilt:
- mehrere Aufnahmeelemente (74) sind in einer Höhenrichtung (22) des Reinigungswagens (10) voneinander beabstandet vorgesehen, und die Halteelemente (70) sind in der Höhenrichtung (22) wahlweise an unterschiedlichen Positionen festlegbar;
- die Aufnahmeelemente (74) sind in der Höhenrichtung (22) äquidistant zueinander angeordnet;
- an den Stützteilen (28) sind Aufnahmeelemente (74) vorgesehen, die an zwei quer und insbesondere senkrecht zueinander ausgerichteten Seiten der Stützteile (28) angeordnet sind, wobei die Halteelemente (70) wahlweise an einem Aufnahmeelement (74) an einer ersten Seite oder an einem Aufnahmeelement (74) an einer zweiten Seite der beiden Seiten festlegbar sind, im Hinblick auf unterschiedliche Orientierungen der Halteelemente (70) relativ zum Stützteil (28).

3. Reinigungswagen nach Anspruch 2, **dadurch gekennzeichnet, dass** zwei Orientierungen vorgesehen sind, die quer und insbesondere senkrecht zueinander ausgerichtet sind, wobei eine jeweilige Orientierung eine Auszugsrichtung für eine ausziehbare Bevorratungseinrichtung (48) definiert, und/oder dass die an den zwei quer zueinander angeordneten Seiten angeordneten Aufnahmeelemente (74) in einer Höhenrichtung (22) des Reinigungswagens (10; 150; 170; 180) an derselben Position angeordnet sind.

4. Reinigungswagen nach einem der voranstehenden Ansprüche, **dadurch gekennzeichnet, dass** die Bevorratungseinrichtungen (48) Behälter (58) sind oder umfassen, die einen Aufnahmeraum für Reinigungsutensilien aufweisen oder bilden.

5. Reinigungswagen nach Anspruch 4, **dadurch gekennzeichnet, dass** zumindest zwei Behälter (58) unterschiedliche Größen aufweisen, insbesondere dass die Behälter (58) entlang einer Höhenrichtung (22) des Reinigungswagens unterschiedliche Höhen aufweisen und vorzugsweise quer zur Höhenrichtung (22) einen identischen Querschnitt aufweisen, und/oder dass die Erstreckungen der Behälter (58) in der Höhenrichtung (22) Verhältnisse zueinander aufweisen, die durch Zweierpotenzen gegeben sind, oder dass die Erstreckungen der Behälter (58) in der Höhenrichtung (22) ganzzahlige Vielfache voneinander sind.

6. Reinigungswagen nach einem der voranstehenden Ansprüche, **dadurch gekennzeichnet, dass** die Bevorratungseinrichtungen (48) plattenförmige oder im Wesentlichen plattenförmige Aufstellelemente (60) mit einer jeweiligen Aufstellfläche für Reinigungsutensilien umfassen.

7. Reinigungswagen nach Anspruch 6, **dadurch gekennzeichnet, dass** zumindest eines der Folgenden gilt:
- die Aufstellelemente (60) sind Zwischenböden oder Trennböden eines Aufnahmeraums (46) des Reinigungswagens (10; 150; 170; 180);
- mindestens ein Aufstellelement (60) bildet ein Abdeckelement (126) für einen Behälter (58) aus, wobei insbesondere ein Querschnitt des Aufstellelementes (60) und des Behälters (58) quer zu einer Höhenrichtung (22) des Reinigungswagens (10; 150; 170; 180) gleich oder im Wesentlichen gleich sind, um den Behälter (58) vollständig oder im Wesentlichen vollständig zu überdecken;
- an mindestens einem Halteelement (70) ist ein Aufstellelement (60) und in einer Höhenrichtung darunter ein Behälter (58) halterbar, wobei das Aufstellelement (60) den Behälter (58) bevorzugt unmittelbar überdeckt.

8. Reinigungswagen nach einem der voranstehenden Ansprüche, **dadurch gekennzeichnet, dass** der Reinigungswagen (10; 150; 170; 180) eine Kennzeichnungseinrichtung zum Kennzeichnen der Bevorratungseinrichtungen (48) aufweist und/oder dass die Halteelemente (70) Auszugführungen (100) sind und/oder umfassen, die jeweils mindestens ein Führungsglied (106, 110) für die Bevorratungseinrichtungen (48) aufweisen, wobei eine jeweilige Bevorratungseinrichtung (48) entlang des Führungsglieds (106, 110) von einer eingeschobenen Position in mindestens eine ausgezogene Position und umgekehrt verschiebbar ist.

9. Reinigungswagen nach Anspruch 8, **dadurch gekennzeichnet, dass** zumindest eines der Folgenden gilt:
- die Bevorratungseinrichtung (48) ist zur Einnahme von zwei ausgezogenen Stellungen ausgebildet und ist entlang des Führungsgliedes (106, 110) ausgehend von der eingeschobenen Stellung in zwei einander entgegengesetzte Richtungen in eine jeweilige ausgezogene Stellung überführbar;
- die Bevorratungseinrichtungen (48) umfassen Haltevorsprünge (62), die in die Führungsglieder (106, 110) eingreifen, wobei die jeweilige Bevorratungseinrichtung (48) vorzugsweise in der eingeschobenen und/oder der mindestens einen ausgezogenen Position mit dem Führungsglied (106, 110) verrastbar ist.

10. Reinigungswagen nach einem der voranstehenden Ansprüche, **dadurch gekennzeichnet, dass** zumindest eines der Folgenden gilt:
- die Aufnahmeelemente (74) sind an jeweiligen Seiten der Stützteile (28) angeordnet, die einem weiteren zu dem Stützteil (28) beabstandeten Stützteil (28) zugewandt sind, wobei insbesondere an zwei im Abstand zueinander angeordneten Stützteilen (28) Aufnahmeelemente (74) einander gegenüberliegend an den Stützteilen (28) angeordnet sind;
- ein jeweiliges Halteelement (70) ist mit einander abgewandten Endabschnitten (102, 104) an zwei voneinander beabstandeten Stützteilen (28) gehalten;
- die Halteelemente (70) sind jeweils paarweise angeordnet, wobei einem in einer Höhenrichtung (22) des Reinigungswagens (10; 150; 170; 180) am Rahmen (16) angeordneten Halteelement (70) ein korrespondierendes Halteelement (70) gegenüberliegend am Rahmen (16) zugeordnet ist.

11. Reinigungswagen nach einem der voranstehenden Ansprüche, **dadurch gekennzeichnet, dass** die Stützteile (28) die Aufnahmeelemente (74) umfassen oder ausbilden, insbesondere dass die Aufnahmeelemente (74) einteilig mit den Stützteilen (28) gebildet sind, oder dass der Reinigungswagen (10; 150; 170; 180) die Aufnahmeelemente (74) umfassende Aufnahmeteile (72) umfasst, die separat von den Stützteilen (28) gebildet und mit den jeweiligen Stützteilen (28) verbunden sind.

12. Reinigungswagen nach Anspruch 11, wobei die separat von den Stützteilen gebildeten Aufnahmeteile vorgesehen sind, **dadurch gekennzeichnet, dass** zumindest eines der Folgenden gilt:
- am jeweiligen Aufnahmeteil (72) ist eine Mehrzahl von Aufnahmeelementen (74) angeordnet;
- die Stützteile (28) sind als Profilteile ausgeführt, und/oder die Aufnahmeteile (72) sind leistenförmig ausgebildet;
- die Aufnahmeteile (72) sind durch Kraft- und/oder Formschluss am jeweiligen Stützteil (28) festgelegt;
- die Aufnahmeteile (72) sind manuell und/oder werkzeuglos am jeweiligen Stützteil (28) festlegbar;
- die Aufnahmeteile (72) sind in das jeweilige Stützteil (28) einschiebbar.

13. Reinigungswagen nach einem der voranstehenden Ansprüche, **dadurch gekennzeichnet, dass** zumindest eines der Folgenden gilt:
- mindestens ein Halteelement (70) umfasst zwei quer zueinander ausgerichtete und insbesondere senkrecht aneinandergrenzende Anlagebereiche (122), über welche das Halteelement (70), bevorzugt flächig, an korrespondierenden Anlagebereichen (98) des Stützelementes (28) oder eines die Aufnahmeelemente (74) umfassenden Aufnahmeteiles (72) anliegt;
- die Halteelemente (70) sind durch Kraft- und/oder Formschluss an den Aufnahmeelementen (74) festlegbar;
- die Halteelemente (70) sind lösbar an den Aufnahmeelementen (74) festlegbar;
- die Halteelemente (70) sind manuell und/oder werkzeuglos an den Aufnahmeelementen (74) festlegbar und/oder von diesen lösbar.

14. Reinigungswagen nach einem der voranstehenden Ansprüche, **dadurch gekennzeichnet, dass** zumindest eines der Folgenden gilt:
- die Halteelemente (70) und die Aufnahmeelemente (74) umfassen Haltevorsprünge (114) und korrespondierende Eingriffsöffnungen (96) für die Haltevorsprünge (114), die in einer Verbindungsstellung miteinander in Eingriff stehen, wobei insbesondere die Haltevorsprünge (114) an den Halteelementen (70) angeordnet sind und die Aufnahmeelemente (74) die Eingriffsöffnungen (96) umfassen oder bilden, wobei vorzugsweise Vorspannelemente (118) vorgesehen sind, entgegen deren Wirkung die Haltevorsprünge (114) außer Eingriff mit den Eingriffsöffnungen (96) bringbar sind;
- die Halteelemente (70) und die Aufnahmeelemente (74) umfassen Ausrichtvorsprünge (124) und korrespondierende Nuten (92) für die Ausrichtvorsprünge (124), die im verbundenen Zustand der Halteelemente (70) mit den Aufnahmeelementen (74) in Eingriff stehen, wobei insbesondere die Ausrichtvorsprünge (124) an den Halteelementen (70) angeordnet sind und die Nuten (92) an den Stützteilen (28) oder an den Aufnahmeteilen (72).

15. Reinigungswagen nach einem der voranstehenden Ansprüche, **dadurch gekennzeichnet, dass** der Reinigungswagen (10; 150; 170; 180) mindestens eine Tür (50) umfasst, die von einer Schließstellung in eine Öffnungsstellung und umgekehrt überführbar ist, vorzugsweise dass die Tür (50) eine Türwandung (128) und Fixierteile (130) umfasst, zwischen denen die Türwandung (128) gehalten oder angeordnet ist, und dass die Fixierteile (130) über Lagerelemente (134) direkt oder indirekt am Rahmen (16) schwenkbar gehalten sind.

16. Reinigungswagen nach Anspruch 15, **dadurch gekennzeichnet, dass** an zumindest einem der Folgenden ein korrespondierendes Lagerelement für ein Lagerelement (134) am Fixierteil angeordnet oder gebildet ist:
- am Rahmenunterteil (20);
- am Rahmenoberteil (24);
- an mindestens einem Halteelement (70);
und/oder dass die Tür (50) in zwei verschiedenartigen Orientierungen und Positionen am Reinigungswagen (10; 150; 170; 180) anbringbar ist, in denen die Tür (50) in voneinander weg weisenden Richtungen relativ zum Rahmen (16) um parallele Schwenkachsen (142) in die Öffnungsstellung überführbar ist, wobei am Rahmenunterteil (20) und/oder am Rahmenoberteil (24) unterschiedliche Lagerelemente (140) vorgesehen sind und/oder wobei hierfür mindestens ein unterschiedliches Halteelement (70) mit einem jeweiligen Lagerelement (140) vorgesehen ist.

17. Reinigungswagen nach einem der voranstehenden Ansprüche, **dadurch gekennzeichnet, dass** am Rahmenoberteil (24) eine Deckenwand (56) angeordnet ist, die von einer Schließstellung in eine Öffnungsstellung überführbar ist und/oder die vom Rahmenoberteil (24) entfernbar ist, und/oder dass der Reinigungswagen (10; 150; 170; 180) handgeführt ist und eine Griffeinrichtung (32) zum Ergreifen für einen Benutzer umfasst.

## Claims

1. Cleaning cart, comprising
a frame (16) having a frame lower part (20), a frame upper part (24) and support parts (28) which connect the frame lower part (20) to the frame upper part (24) and are spaced apart from one another,
rollers (14) at the frame lower part (20) for moving on a ground surface (12),
storage devices (48) for receiving therein and/or supporting thereon cleaning accessories,
retaining elements (70) for holding the storage devices (48),
and receiving elements (74) arranged at the support parts (28) in a predefined position,
wherein the retaining elements (70) are selectively fixable to the receiving elements (74) for having the storage devices (48) assume different relative positions with respect to the support parts (28), **characterized in that** the storage devices (48) are extendable relative to the frame (16) along two directions oriented transversely and in particular perpendicularly to one another, depending on the orientation of the retaining elements (70) relative to the frame (16).

2. Cleaning cart in accordance with claim 1, **characterized in that** at least one of the following applies:
- a plurality of receiving elements (74) are provided in spaced relation to one another in a height direction (22) of the cleaning cart (10), and the retaining elements (70) are selectively fixable at different positions in the height direction (22);
- the receiving elements (74) are arranged equidistantly from one another in the height direction (22);
- at the support parts (28), receiving elements (74) are provided which are arranged on two sides, oriented transversely and in particular perpendicularly to one another, of the support parts (28), wherein the retaining elements (70) are selectively fixable to a receiving element (74) on a first side or to a receiving element (74) on a second side of the two sides, with respect to different orientations of the retaining elements (70) relative to the support part (28).

3. Cleaning cart in accordance with claim 2, **characterized in that** two orientations are provided, these being oriented transversely and in particular perpendicularly to one another, wherein a respective orientation defines a pullout direction for an extendable storage device (48), and/or **in that** the receiving elements (74) arranged on the two sides arranged transversely to one another are arranged at the same position in a height direction (22) of the cleaning cart (10; 150; 170; 180).

4. Cleaning cart in accordance with any one of the preceding claims, **characterized in that** the storage devices (48) are or comprise containers (58) which have or form a receiving space for cleaning utensils.

5. Cleaning cart in accordance with claim 4, **characterized in that** at least two containers (58) have different sizes, in particular **in that** the containers (58) have differing heights along a height direction (22) of the cleaning cart, and preferably are of identical cross-section in a direction transverse to the height direction (22), and/or **in that** the extensions of the containers (58) in the height direction (22) have ratios to each other that are given by powers of two, or **in that** the extensions of the containers (58) in the height direction (22) are integer multiples of each other.

6. Cleaning cart in accordance with any one of the preceding claims, **characterized in that** the storage devices (48) comprise plate-shaped or substantially plate-shaped supporting elements (60) having a respective supporting surface for cleaning utensils.

7. Cleaning cart in accordance with claim 6, **characterized in that** at least one of the following applies:
- the supporting elements (60) are intermediate shelves or dividing shelves of a receiving space (46) of the cleaning cart (10; 150; 170; 180);
- at least one supporting element (60) forms a cover element (126) for a container (58), wherein in particular a cross-section of the supporting element (60) and of the container (58) in a direction transverse to a height direction (22) of the cleaning cart (10; 150; 170; 180) are identical or substantially identical in order to completely or substantially completely cover the container (58);
- a supporting element (60) and a container (58) underlying same in a height direction are holdable to at least one retaining element (70), preferably wherein the supporting element (60) directly covers the container (58).

8. Cleaning cart in accordance with any one of the preceding claims, **characterized in that** the cleaning cart (10; 150; 170; 180) comprises a marking device for marking the storage devices (48) and/or **in that** the retaining elements (70) are and/or comprise pullout guides (100), each of which has at least one guide member (106, 110) for the storage devices (48), wherein a respective storage device (48) is displaceable along the guide member (106, 110) from a retracted position to at least one extended position and vice versa.

9. Cleaning cart in accordance with claim 8, **characterized in that** at least one of the following applies:
- the storage device (48) is configured for assuming two extended positions and is transferrable along the guide member (106, 110) starting from the retracted position in two mutually opposite directions to a respective extended position;
- the storage devices (48) comprise retaining projections (62) which engage in the guide members (106, 110), preferably wherein the respective storage device (48) is latchable with the guide member (106, 110) when in the retracted position and/or in the at least one extended position.

10. Cleaning cart in accordance with any one of the preceding claims, **characterized in that** at least one of the following applies:
- the receiving elements (74) are arranged on respective sides of the support parts (28) that face towards another support part (28), spaced apart from the support part (28), wherein in particular at two support parts (28) arranged a distance apart from each other, receiving elements (74) are arranged at the support parts (28) in opposing relation to one another;
- a respective retaining element (70) is holdable at end sections (102, 104) thereof facing away from each other to two support parts (28) spaced apart from each other;
- the retaining elements (70) in each case are arranged in pairs, wherein a retaining element (70) arranged at the frame (16) in a height direction (22) of the cleaning cart (10; 150; 170; 180) is associated with a corresponding retaining element (70) in opposing relation thereto at the frame (16).

11. Cleaning cart in accordance with any one of the preceding claims, **characterized in that** the support parts (28) comprise or form the receiving elements (74), in particular **in that** the receiving elements (74) are formed in one piece with the support parts (28), or **in that** the cleaning cart (10; 150; 170; 180) comprises receiving parts (72) comprising the receiving elements (74), which receiving parts (72) are formed separately from the support parts (28) and are connected to the respective support parts (28).

12. Cleaning cart in accordance with claim 11, wherein the receiving parts formed separately from the support parts are provided, **characterized in that** at least one of the following applies:
- a plurality of receiving elements (74) are arranged at the respective receiving part (72);
- the support parts (28) are configured as profile parts and/or the receiving parts (72) are of strip-shaped configuration;
- the receiving parts (72) are fixed to the respective support part (28) by a force-locking and/or form-locking connection;
- the receiving parts (72) are fixable to the respective support part (28) by hand and/or without tools;
- the receiving parts (72) are slidable into the respective support part (28).

13. Cleaning cart in accordance with any one of the preceding claims, **characterized in that** at least one of the following applies:
- at least one retaining element (70) comprises two contact regions (122) oriented transversely to each other and in particular perpendicularly adjacent to one another, via which contact regions (122) the retaining element (70) is in contact, preferably area contact, against corresponding contact regions (98) of the support part (28) or of a receiving part (72) comprising the receiving elements (74);
- the retaining elements (70) are fixable to the receiving elements (74) by a force-locking and/or form-locking connection;
- the retaining elements (70) are releasably fixable to the receiving elements (74);
- the retaining elements (70) are fixable to and/or releasable from the receiving elements (74) by hand and/or without tools.

14. Cleaning cart in accordance with any one of the preceding claims, **characterized in that** at least one of the following applies:
- the retaining elements (70) and the receiving elements (74) comprise retaining projections (114) and corresponding engagement openings (96) for the retaining projections (114) which are in engagement with one another when in a connecting position, in particular **in that** the retaining projections (114) are arranged at the retaining elements (70), and the receiving elements (74) comprise or form the engagement openings (96), wherein preferably biasing elements (118) are provided against whose action the retaining projections (114) are bringable out of engagement with the engagement openings (96);
- the retaining elements (70) and the receiving elements (74) comprise orienting projections (124) and corresponding grooves (92) for the orienting projections (124), these being in engagement with each other in the connected state of the retaining elements (70) with the receiving elements (74), wherein in particular the orienting projections (124) are arranged at the retaining elements (70) and the grooves (92) are arranged at the support parts (28) or at the receiving parts (72).

15. Cleaning cart in accordance with any one of the preceding claims, **characterized in that** the cleaning cart (10; 150; 170; 180) comprises at least one door (50) which is transferable from a closed position to an open position and vice versa, preferably the door (50) comprises a door wall (128) and fixing parts (130) between which the door wall (128) is held or arranged, and **in that** the fixing parts (130) are pivotably held, directly or indirectly, to the frame (16) via bearing elements (134).

16. Cleaning cart in accordance with claim 15, **characterized in that** a corresponding bearing element for a bearing element (134) at the fixing part is arranged or formed at at least one of the following:
- at the frame lower part (20);
- at the frame upper part (24);
- at at least one retaining element (70);
and/or **in that** the door (50) is attachable to the cleaning cart (10; 150; 170; 180) in two different orientations and positions in which the door (50), rotating about parallel pivot axes (142) in directions pointing away from each other relative to the frame (16), is transferable to the open position, wherein different bearing elements (140) are provided at the frame lower part (20) and/or at the frame upper part (24), and/or wherein at least one different retaining element (70) having a respective bearing element (140) is provided for this purpose.

17. Cleaning cart in accordance with any one of the preceding claims, **characterized in that** arranged at the frame upper part (24) is a top wall (56) which is transferable from a closed position to an open position and/or which is removable from the frame upper part (24) and/or **in that** the cleaning cart (10; 150; 170; 180) is hand-guided and comprises a handle device (32) graspable by a user.

## Revendications

1. Chariot de nettoyage comprenant :
un châssis (16) avec une partie inférieure de châssis (20), une partie supérieure de châssis (24) et des éléments de support (28) qui relient la partie inférieure de châssis (20) à la partie supérieure de châssis (24) et sont espacés entre eux,
des roulettes (14) sur la partie inférieure de châssis (20) pour le déplacement sur une surface de plancher (12),
des dispositifs de stockage (48) pour recevoir et/ou déposer des accessoires de nettoyage,
des éléments de maintien (70) pour maintenir les dispositifs de stockage (48) et des éléments de logement (74) disposés sur les éléments de support (28) dans une position prédéfinie,
lesdits éléments de maintien (70) étant optionnellement fixables sur les éléments de logement (74) pour prendre différentes positions relatives des dispositifs de stockage (48) par rapport aux éléments de support (28), **caractérisé en ce que** les dispositifs de stockage (48) peuvent être extraits par rapport au châssis (16) le long de deux directions alignées transversalement et en particulier perpendiculairement l'une à l'autre, en fonction de l'orientation des éléments de maintien (70) par rapport au châssis (16).

2. Chariot de nettoyage selon la revendication 1, **caractérisé en ce qu'**au moins l'une des conditions suivantes est remplie :
- plusieurs éléments de logement (74) sont prévus espacés entre eux dans une direction de hauteur (22) du chariot de nettoyage (10), et les éléments de maintien (70) peuvent être fixés optionnellement à différentes positions dans la direction de hauteur (22) ;
- les éléments de logement (74) sont disposés équidistants entre eux dans la direction de hauteur (22) ;
- sur les éléments de support (28) sont prévus des éléments de logement (74), qui sont disposés sur deux côtés des éléments de support (28) alignés transversalement et en particulier perpendiculairement l'un à l'autre, les éléments de maintien (70) pouvant être fixés optionnellement à un élément de logement (74) sur un premier côté ou à un élément de logement (74) sur un second côté des deux côtés, eu égard à différentes orientations des éléments de maintien (70) par rapport à l'élément de support (28).

3. Chariot de nettoyage selon la revendication 2, **caractérisé en ce que** deux orientations sont prévues, qui sont alignées transversalement et en particulier perpendiculairement l'une à l'autre, une orientation respective définissant une direction d'extraction pour un dispositif de stockage extractible (48), et/ou **en ce que** les éléments de logement (74) disposés sur les deux côtés alignés transversalement les uns aux autres sont disposés à la même position dans une direction de hauteur (22) du chariot de nettoyage (10 ; 150 ; 170 ; 180).

4. Chariot de nettoyage selon l'une des revendications précédentes, **caractérisé en ce que** les dispositifs de stockage (48) sont ou comprennent des récipients (58) qui ont ou forment un espace de logement pour des ustensiles de nettoyage.

5. Chariot de nettoyage selon la revendication 4, **caractérisé en ce qu'**au moins deux récipients (58) ont des tailles différentes, en particulier que les récipients (58) ont des hauteurs différentes le long d'une direction de hauteur (22) du chariot de nettoyage et présentent de préférence une section transversale identique transversalement à la direction de hauteur (22), et/ou **en ce que** les extensions des récipients (58) dans la direction de hauteur (22) présentent des rapports les uns aux autres qui sont donnés par des puissances de deux, ou **en ce que** les extensions des récipients (58) dans la direction de hauteur (22) sont des multiples entiers les uns des autres.

6. Chariot de nettoyage selon l'une des revendications précédentes, **caractérisé en ce que** les dispositifs de stockage (48) comprennent des éléments de support (60) en forme de plaque ou essentiellement en forme de plaque avec une surface de support respective pour des ustensiles de nettoyage.

7. Chariot de nettoyage selon la revendication 6, **caractérisé en ce qu'**au moins l'une des conditions suivantes est remplie :
- les éléments de support (60) sont des fonds intermédiaires ou des fonds de séparation d'un espace de logement (46) du chariot de nettoyage (10 ; 150 ; 170 ; 180) ;
- au moins un élément de support (60) forme un élément de recouvrement (126) pour un récipient (58), une section transversale de l'élément de support (60) et du récipient (58) étant en particulier égale ou essentiellement égale transversalement à une direction de hauteur (22) du chariot de nettoyage (10 ; 150 ; 170 ; 180) pour recouvrir le récipient (58) entièrement ou essentiellement entièrement ;
- sur au moins un élément de maintien (70) peuvent être maintenus un élément de support (60) et en dessous dans une direction de hauteur un récipient (58), l'élément de support (60) recouvrant de préférence immédiatement le récipient (58).

8. Chariot de nettoyage selon l'une des revendications précédentes, **caractérisé en ce que** le chariot de nettoyage (10 ; 150 ; 170 ; 180) comporte un dispositif d'identification pour identifier les dispositifs de stockage (48) et/ou **en ce que** les éléments de maintien (70) sont et/ou comprennent des guides d'extraction (100), qui ont chacun au moins un élément de guidage (106, 110) pour les dispositifs de stockage (48), un dispositif de stockage respectif (48) pouvant être déplacé le long de l'élément de guidage (106, 110) d'une position insérée à au moins une position extraite et inversement.

9. Chariot de nettoyage selon la revendication 8, **caractérisé en ce qu'**au moins l'une des conditions suivantes est remplie :
- le dispositif de stockage (48) est conçu pour prendre deux positions extraites et peut être transféré le long de l'élément de guidage (106, 110) à partir de la position insérée dans deux directions opposées l'une à l'autre vers une position extraite respective ;
- les dispositifs de stockage (48) comprennent des saillies de maintien (62) qui s'engagent dans les éléments de guidage (106, 110), le dispositif de stockage respectif (48) pouvant être de préférence verrouillé dans la position insérée et/ou l'au moins une position extraite avec l'élément de guidage (106, 110).

10. Chariot de nettoyage selon l'une des revendications précédentes, **caractérisé en ce qu'**au moins l'une des conditions suivantes est remplie :
- les éléments de logement (74) sont disposés sur des côtés respectifs des éléments de support (28) qui font face à un autre élément de support (28) espacé de l'élément de support (28), en particulier sur deux éléments de support (28) espacés l'un de l'autre, les éléments de logement (74) étant disposés en face les uns des autres sur les éléments de support (28) ;
- un élément de maintien respectif (70) est maintenu par des extrémités opposées (102, 104) sur deux éléments de support (28) espacés l'un de l'autre ;
- les éléments de maintien (70) sont disposés par paires, un élément de maintien (70) disposé dans une direction de hauteur (22) du chariot de nettoyage (10 ; 150 ; 170 ; 180) sur le châssis (16) étant associé à un élément de maintien (70) correspondant en face sur le châssis (16).

11. Chariot de nettoyage selon l'une des revendications précédentes, **caractérisé en ce que** les éléments de support (28) comprennent ou forment les éléments de logement (74), en particulier que les éléments de logement (74) sont formés d'une seule pièce avec les éléments de support (28), ou **en ce que** le chariot de nettoyage (10 ; 150 ; 170 ; 180) comprend des pièces de logement (72) comprenant les éléments de logement (74), qui sont formées séparément des éléments de support (28) et sont reliées aux éléments de support (28) respectifs.

12. Chariot de nettoyage selon la revendication 11, dans lequel les pièces de logement formées séparément des éléments de support sont prévues, **caractérisé en ce qu'**au moins l'un des éléments suivants s'applique :
sur la pièce de logement respective (72) est disposée une pluralité d'éléments de logement (74) ;
les éléments de support (28) sont réalisés comme des pièces profilées, et/ou les pièces de logement (72) sont formées en forme de bande ;
les pièces de logement (72) sont fixées par un emboîtement par force et/ou par complémentarité de forme sur l'élément de support respectif (28) ;
les pièces de logement (72) peuvent être fixées manuellement et/ou sans outil sur l'élément de support respectif (28) ;
les pièces de logement (72) peuvent être insérées dans l'élément de support respectif (28).

13. Chariot de nettoyage selon l'une des revendications précédentes, **caractérisé en ce qu'**au moins l'un des éléments suivants s'applique :
- au moins un élément de maintien (70) comprend deux zones de contact (122) alignées transversalement et en particulier adjacentes perpendiculairement l'une à l'autre, par lesquelles l'élément de maintien (70) repose, de préférence de manière plane, sur des zones de contact correspondantes (98) de l'élément de support (28) ou d'une pièce de logement (72) comprenant les éléments de logement (74) ;
- les éléments de maintien (70) peuvent être fixés par un emboîtement par force et/ou par complémentarité de forme sur les éléments de logement (74) ;
- les éléments de maintien (70) peuvent être fixés de manière amovible sur les éléments de logement (74) ;
- les éléments de maintien (70) peuvent être fixés manuellement et/ou sans outil sur les éléments de logement (74) et/ou en être détachés.

14. Chariot de nettoyage selon l'une des revendications précédentes, **caractérisé en ce qu'**au moins l'un des éléments suivants s'applique :
- les éléments de maintien (70) et les éléments de logement (74) comprennent des saillies de maintien (114) et des ouvertures d'emboîtement correspondantes (96) pour les saillies de maintien (114), qui sont en emboîtement les unes avec les autres dans une position de connexion, les saillies de maintien (114) étant en particulier disposées sur les éléments de maintien (70) et les éléments de logement (74) comprenant ou formant les ouvertures d'emboîtement (96), des éléments de précontrainte (118) étant de préférence prévus, contre l'effet desquels les saillies de maintien (114) peuvent être désengagées des ouvertures d'emboîtement (96) ;
- les éléments de maintien (70) et les éléments de logement (74) comprennent des saillies d'alignement (124) et des rainures correspondantes (92) pour les saillies d'alignement (124), qui sont en emboîtement dans l'état connecté des éléments de maintien (70) avec les éléments de logement (74), les saillies d'alignement (124) étant en particulier disposées sur les éléments de maintien (70) et les rainures (92) sur les éléments de support (28) ou sur les pièces de logement (72).

15. Chariot de nettoyage selon l'une des revendications précédentes, **caractérisé en ce que** le chariot de nettoyage (10 ; 150 ; 170 ; 180) comprend au moins une porte (50), qui peut être transférée d'une position de fermeture à une position d'ouverture et inversement, de préférence **en ce que** la porte (50) comprend une paroi de porte (128) et des pièces de fixation (130), entre lesquelles la paroi de porte (128) est maintenue ou disposée, et que les pièces de fixation (130) sont maintenues pivotantes directement ou indirectement sur le châssis (16) via des éléments de roulement (134).

16. Chariot de nettoyage selon la revendication 15, **caractérisé en ce que** sur au moins l'un des éléments suivants est disposé ou formé un élément de roulement correspondant pour un élément de roulement (134) sur la pièce de fixation :
- sur la partie inférieure de châssis (20) ;
- sur la partie supérieure de châssis (24) ;
- sur au moins un élément de maintien (70) ;
et/ou **en ce que** la porte (50) peut être fixée dans deux orientations et positions différentes sur le chariot de nettoyage (10 ; 150 ; 170 ; 180), dans lesquelles la porte (50) peut être transférée dans la position d'ouverture dans des directions s'éloignant l'une de l'autre par rapport au châssis (16) autour d'axes de pivotement parallèles (142), des éléments de roulement différents (140) étant prévus sur la partie inférieure de châssis (20) et/ou sur la partie supérieure de châssis (24) et/ou au moins un élément de maintien (70) différent avec un élément de roulement respectif (140) étant prévu à cet effet.

17. Chariot de nettoyage selon l'une des revendications précédentes, **caractérisé en ce que** sur la partie supérieure de châssis (24) est disposée une paroi de plafond (56), qui peut être transférée d'une position de fermeture à une position d'ouverture et/ou qui est amovible de la partie supérieure de châssis (24), et/ou **en ce que** le chariot de nettoyage (10 ; 150 ; 170 ; 180) est guidé manuellement et comprend un dispositif de poignée (32) pour être saisi par un utilisateur.
